# EUROPEAN PATENT APPLICATION

(11) **EP 1 437 812 A1**
(43) Date of publication of application: **14.07.2004**
(21) Application number: 02801478.5
(22) Date of filing: 12.09.2002
(51) Int. Cl.: H02G 3/00

(54) **WIRE CONNECTING FITTING, ATTACHING BODY FIXING TOOL, AND ATTACHING BODY**

(30) Priority: 18.10.2001 JP 2001320899; 27.03.2002 JP 2002288074
(71) Applicant: Mirai Kogyo Kabushiki Kaisha, Anpachi-gun, Gifu 503-0295 (JP)
(72) Inventor: SHIMIZU, Shohachi, MIRAI KOGYO KABUSHIKIKAISHA, Anpachi-gun, Gifu 503-0295 (JP)
(74) Representative: Strachan, Victoria Jane
(86) International application number: PCT/JP2002/009340
(87) International publication number: WO 2003/034561

(57) **Abstract**

A wire connecting fitting capable of easily and quickly effecting a wire fixing operation involved in connecting or assembling supports. To this end, a wire fixing fitting (100), which is used to connect or fix a plurality of metal wires, comprises at least one wire receiving section (10) for receiving the plurality of metal wires arranged side by side or the plurality of metal wires arranged to cross each other, at least a pair of nipping pieces (20) disposed on opposite sides of the wire receiving section (30) and adapted to be elastically deformed by nipping with a tool so as to nip one or the plurality of metal wires received in the wire receiving section (10) , and gripping pieces (30) extending outward from the front ends of these two nipping pieces (20) and capable of gripping with the tool.

## Description

### TECHNICAL FIELD

The present invention relates to a wire metal connecting fitting for a support which is used for connecting supports to each other or assembling the supports, which are formed of metal wires in a net configuration in order to support wiring/piping material. Particularly the present invention relates to a wire connecting fitting capable of easily and quickly effecting a wire fixing operation involved in connecting or assembling supports. Further, the present invention relates to an attaching body fixing tool for fixing an attaching body to wiring/piping material supports composed of wires. Further, the present invention relates to an attaching body to be attached to wiring/piping material supports composed of wires.

### BACKGROUND ART

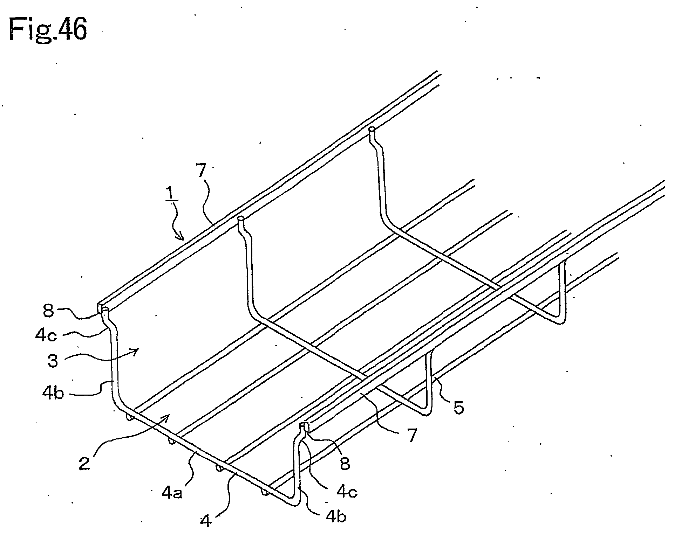

As a support for supporting wiring/piping material, as shown in FIG. 46, a mesh type support, which is a support created by welding metal wires into grids to form net bodies and assembling the net bodies to connect them mutually, has been recently proposed as well as a ladder type. As a fixing fitting for connecting the mesh type supports, a fixing fitting concerning the technique disclosed in Germany Patent Publication No. 2036325 has been proposed.

As shown in FIG. 28, the connecting fixing fitting disclosed in this publication is constituted so as to nip two metal wires which is related to supports to be connected mutually and are arranged side by side by screwing two sheets of fittings so as to connect and fix the supports.

However, in order to perform connection and fixation with the connecting fitting according to the above-described technology, it is necessary to conduct a screwing work at each connecting position. This screwing work is a troublesome work accompanying a work of rotating a tool such as screwdrivers or wrenchs. Particularly, such a connecting work that a worker submerges below a support to be connected and works in an unreasonable posture while looking upward is very inconvenient.

In case where supports are arranged over a long distance, the connecting work must be conducted at many positions of the supports, necessarily. In such a case, if the troublesome screwing works are required at all the connecting positions, it takes a long time for the work, which causes a problem.

On the other hand, when a separator or the like is attached to the mesh type support, an attaching fitting for attaching a separator to the above-described ladder type support is mounted on metal wires in case of the mesh type support while it is mounted on a child beam 83. Thus, the attaching fitting for the ladder type support cannot be used for attaching to the mesh type support as it is. This is the same in case where a wire or pipe, a wiring box or the like is attached instead of the separator.

Therefore, an attaching fitting for attaching a separator, wires/pipes to this kind of a mesh type support is demanded. particularly, because supports are often installed at high places, the attaching fittings are required to be attached easily with an excellent workability.

Further, an separator, saddle or the like can be attached to the mesh type support by screwing work like the conventional ladder type support. However, because there are a number of positions demanding the screwing work, such a problem occurs that it takes a long time to install the separators or the like. Further, because a support is often installed at a high place, there occurs such a problem that a worker often needs to rise to that high place and work there to perform the screwing work.

### DISCLOSURE OF THE INVENTION

The present invention adopts a following constitution to solve the above-described problem.

First, the present invention includes a wire connecting fitting, an attaching body fixing tool and an attaching body.

For assembling supports which are formed by combining a plurality of metal wires or connecting and fixing supports to each other, the wire connecting fitting is used for connecting and fixing the metal wires arranged side by side or arranged to cross eadh other. The wire connecting fitting of the present invention comprises a wire receiving section 10, nipping pieces 20 and gripping pieces 30 in order to connect and fix such metal wires.

Although it can be considered that this wire connecting fitting 100 is formed of, for example, a steel plate, the wire connecting fitting 100 is not specifically limited to this material, but it may be composed of any material as long as an object of the present invention can be achieved. Hereinafter, respective components will be described.

First, the wire receiving section 10 will be described. This wire receiving section 10 is for receiving metal wires and is provided between the nipping pieces 20 described later. More specifically, it is considered that the section 10 is formed to have a substantially U-shaped sectional configuration (a Japanese character "J"-shaped sectional configuration) whose one side is open. The width dimension of this wire receiving section 10 is determined arbitrarily depending on the number of metal wires to be received to form the wire receiving section 10. This wire receiving section 10 assembles metal wires temporarily when two or more metal wires are received therein. That is, when a plurality of metal wires are connected and fixed with the wire connecting fitting 100 according to the present invention, first, an separation preventing operation for preventing the plurality of metal wires from being separated from each other occurs by only receiving the plurality of metal wires in the wire receiving section 10.

In the meantime, the wire connecting fitting 100 according to the present invention may be constituted such that the wire receiving section 10 is provided with a separation preventing section 40 to produce the aforementioned separation preventing operation securely.

This separation preventing section 40 is operation for fixing two metal wires arranged side by side. That is, for fixing wires for a support used for connecting supports formed in a net configuration with metal wires for supporting wiring/piping material, assembling the supports and so on, two metal wires arranged side by side are first assembled temporarily by the separation preventing section 40. Then, after the nipping pieces 20 described later are plastically deformed, the two metal wires are fixed without falling off.

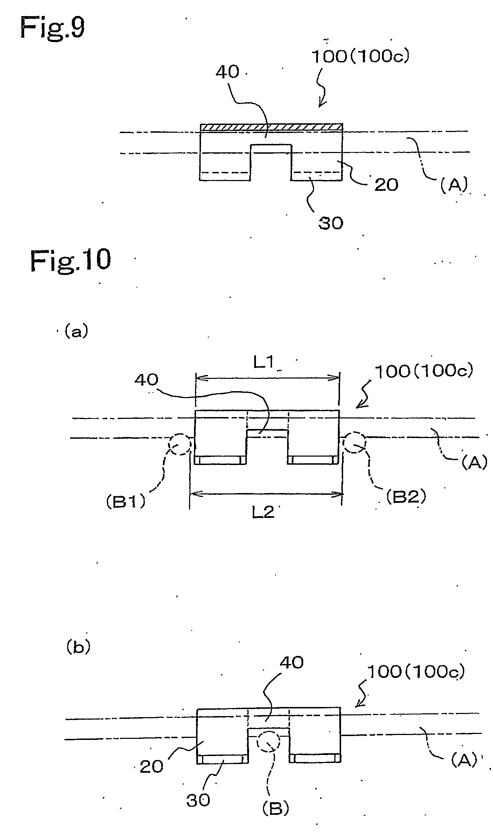

Although the constitution of the separation preventing section 40 may be of any constitution as long as the above-described operation is attained, and the constitution shown in FIG. 9, for example, can be considered. The FIG. 9 is a schematic sectional view showing a state in which metal wires to be nipped indicated with chain double-dashed lines have been received in the fixing fitting 100 according to the present invention. In FIG. 9, the separation preventing section 40 is a remaining section to a cutout formed between the wire nipping sections 20 which are erected sections on both side of the fitting, and sections which abut on a metal wire (A) indicated with chain double-dashed lines corresponds to the separation preventing section.

It can also be considered that this separation preventing section 40 is provided with any expansion preventing means. As a specific expansion preventing means, it can be considered that the separation preventing section 40 is tightened with a bolt in a condition that the metal wires are included.

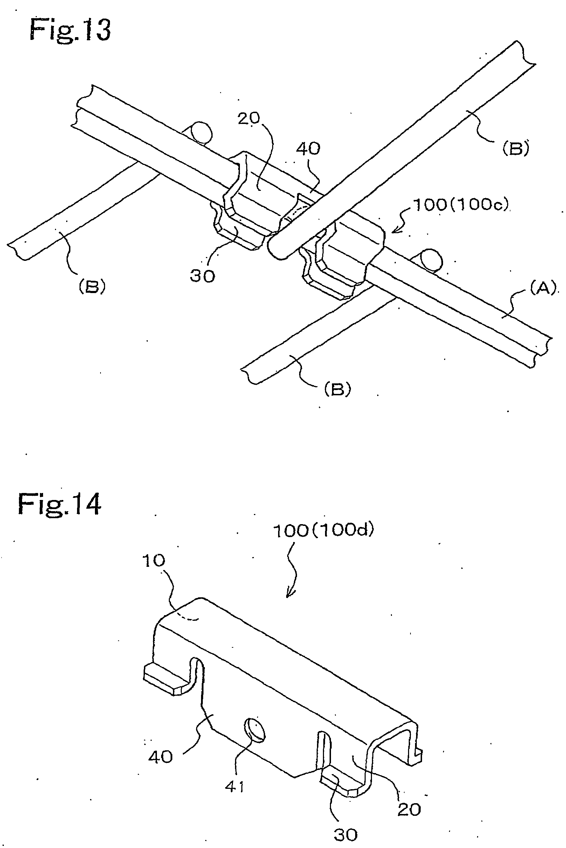

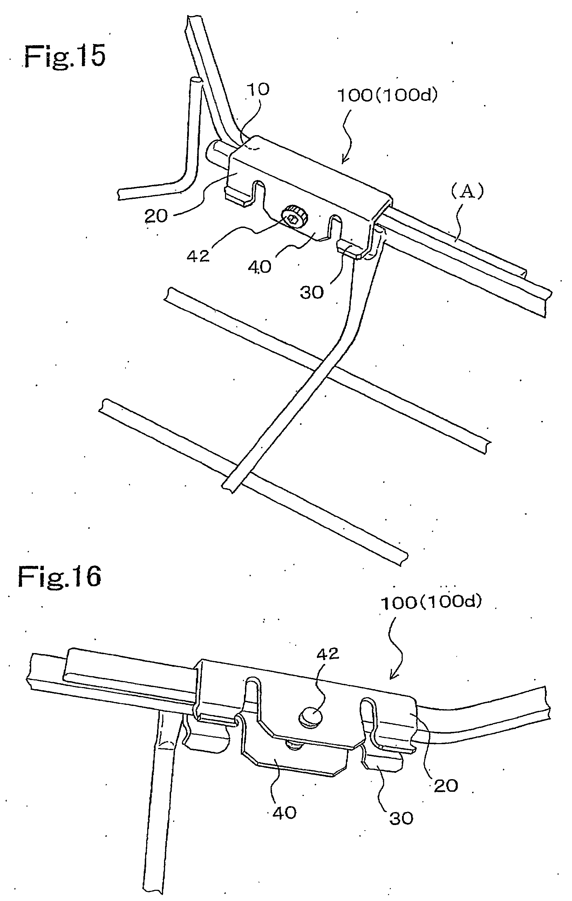

That is, as shown in FIG. 14, bolt holes 41 are formed in the separation preventing sections 40 which are erected to be opposed to each other. Although the bolt hos 41 may be constituted in any manner, specifically, it can be considered that one of these holes is a through hole while the other is a threaded hole. As shown in FIGs. 15, 16, it can be considered that an expansion preventing bolt 42 is inserted into the aforementioned through hole and threaded or fitted to the threaded hole which abuts on a distal end of the bolt, thereby disabling the separation preventing section 40 from expanding outward. Of course, such a constitution may be employed that both the bolt holes 41 are formed in through holes instead of forming one thereof into the threaded hole, and the expansion preventing bolt 42 is inserted into both the through holes so that the expansion preventing bolt 42 is fitted with a nut which is another member in a screwing manner.

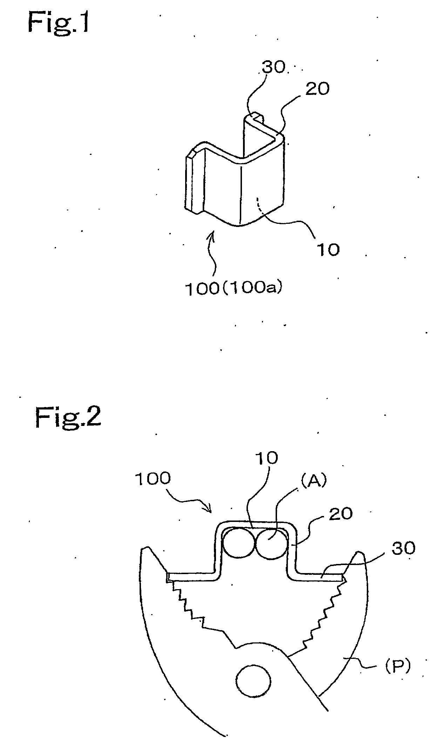

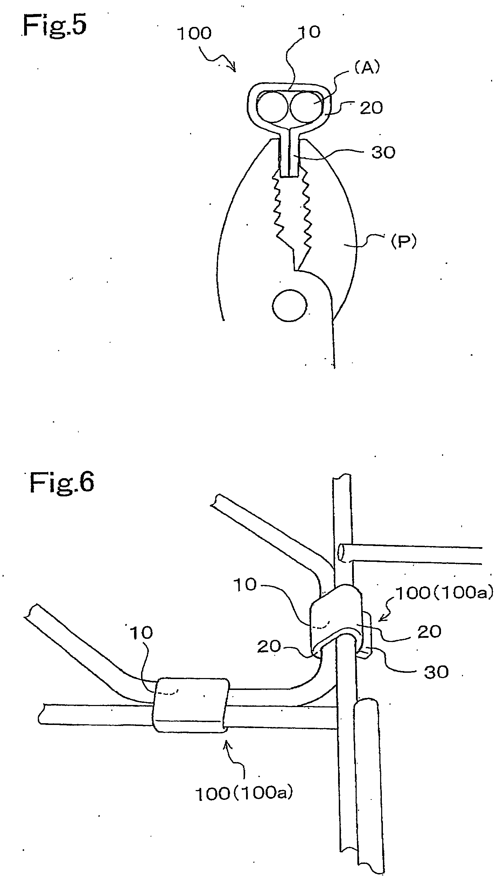

Next, the nipping pieces 20 will be described. The nipping pieces 20 are formed together with the wire receiving section 10 and prevent the metal wire received through the aforementioned opening from falling off from the wire receiving section 10. Although any constitution may be adopted as long as such an operation is exerted, specifically, it can be considered to form protruded pieces integrally with the wire receiving section 10. In the present invention, as shown in FIG.2, at least a pair of the protruded pieces are disposed in a standing manner on opposite sides of the wire receiving section 10 and they are deformed along outer faces of the metal wires by performing plastical deformation in a condition that one or two or more metal wires are received in the wire receiving section 10 (see FIGs. 2-5). Due to this deformation, as shown in FIG. 5, the pair of the protruded pieces (or two or more pairs) abut on with each other in the vicinity of the center of the wire receiving section 10, so that thewire receiving section 10 is substantially closed. Although this protruded pieces may have any constitution as long as the aforementioned operation can be exerted, specifically, it can be considered that the protruded pieces are formed so as to correspond to an outer diameter size or an outer circumference size of a metal wire to be nepped.

It is further preferable that the gripping pieces 30 are formed at distal ends of the protruded pieces. The gripping pieces 30 facilitates and makes secure a gripping work for a worker on a site to nip and press using a nipping tool such as pliers when the protruded pieces are deformed plastically. The gripping pieces are formed to extend outward from the distal ends of the protruded pieces.

When the pair (or two or more pairs) of the protruded pieces are deformed plastically, preferably, the gripping pieces 30 formed at the distal end of the protruded pieces make substantially close contact with each other. When one faces of the gripping pieces 30 are brought into substantially close contact with each other, the aforementioned opening can be substantially closed, and the metal wires can securely be prevented from falling off from the wire receiving section 10.

The wire connecting fitting 100 according to the present invention can be considered to be constituted in a sectional configuration shown in FIG. 2. As for the configuration shown in FIG. 2, the nipping pieces 20 erected on opposite sides of the wire receiving section 10 are disposed in a substantially U-shaped sectional configuration (a Japanese character "J"-shaped configuration) so as to form an opening. Two metal wires are arranged within the receiving section 10 and then, at least a pair of the nipping pieces 20 erected on opposite sides of the wire receiving section 10 are deformed plastically.

After plastically deformed, the nipping pieces 20 are deformed along outer faces of the metal wires received in the wire receiving section 10 so as to substantially close the wire receiving section 10. When the nipping pieces 20 are deformed plastically, the gripping pieces 30 extending outward from the distal end of the nipping pieces 20 are nippped with a nipping tool and after the nipping pieces 20 are deformed, one faces of the gripping pieces 30 come into substantially close contact so as to close the wire receiving section. Consequently, a plurality of metal wires arranged side by side or arranged to cross each other are connected and fixed.

In the meantime, the wire connecting fitting 100 according to the present invention is formed into dimension corresponding to diameters of metal wires to be connected or the like. That is, the width of the wire receiving section 10, the dimension of the nipping piece 20 and the like are determined according to the dimensions corresponding to the diameter of the metal wire to be received in the wire receiving section 10.

As shown in FIG. 10(a), the wire connecting fitting 100 maybe formed in substantially the same dimeasion L1 as an interval L2 between another metal wire (B1) orthogonal to the metal wire (A) to be nipped and another metal wire (B2) arranged in parallel with the other metal wire (B1).

That is, when metal wires are nipped with a connecting fitting formed in substantially the same dimension as the interval between the other metal wires, the connecting fitting falls under the interval between the other metal wires arranged in parallel. Thus, the connecting fitting can be prevented from being deviated in an axial direction of a metal wire to be nipped.

Further, by providing this wire connecting fitting 100 with a deviation preventing section, the wire connecting fitting 100 may be prevented from being deviated in the axial direction of the nipped metal wire.

As shown in FIG. 10 (b), the deviation preventing section prevents a deviation in the axial direction of the metal wire nipped by the connecting fitting, because the connecting fitting engages the outer circomference of the other metal wire orthogonal to the metal wire nipped by the connecting fitting.

This wire connecting fitting 100 may be so constructed that, when the wire connecting fitting 100 is arranged at an orthogonal section in which the metal wire nipped by the nipping pieces 20 and other metal wires are orthogonal to each other so as to form a support, the metal wire is received in the wire receiving section 10 while the other metal wires are received in a space portion formed with a side end of the nipping piece 20 as its proximal end, so that the other metal wires do not interfere with or abut on the nipping pieces 20.

That is, as shown in FIG. 10 (b) , it is so constructed that when a metal wire nipped by the nipping pieces 20 is received in the wire receiving section 10, other metal wires orthogonal to the metal wire can be retreated into the space portion formed with the side end of the nipping piece 20 as its proximal end. With such a constitution, the wire connecting fitting 100 can be easily mounted on a support without metal wires abutting on the nipping piece 20.

On the other hand, the wire connecting fitting according to the present invention can connect and fix not only metal wires arranged side by side but also metal wires arranged to cross each other.

That is, in a wiring/piping material support constructed by combining a plurality of metal wires, the plurality of metal wires are fixed such that they cross each other at a predetermined angle.

The wire connecting fitting 100 capable of fixing metal wires such that they cross at the predetermined angle has such a feature that it comprises the wire receiving section 10, nipping pieces 20 and particularly an opening. Because the wire receiving section 10 and the nipping pieces 20 have been already described; only specific matters of this embodiment will be described and description of the same matter as the described one is omitted.

According to this embodiment, the wire receiving section 10 constitutes a basic body of the wire connecting fitting 100 which receives a metal wire constituting a support and fixes the axial direction of each metal wire in a predetermined direction.

Because the wire connecting fitting 100 according to this embodiment connects and fixes a plurality of metal wires constituting the support such that they cross each other, this wire receiving section 10 needs to receive respective metal wires arranged to cross each other. Thus, as for specific constitution of the wire receiving section 10, it is permissible to dispose the wire receiving sections 10 such that the openings cross each other with respect to their axial directions, those openings being produced by forming in a substantially U-shaped sectional configuration and having an opening on one side so as to receive the metal wires . Although the width of the wire receiving section 10 can be of substantially the same dimension as the diameter of a metal wire, the present invention is not limited to this constitution and it can be changed to the width substantially the same as the dimension equal to the number of the diameters of received metal wires.

The condition arranged to cross each other indicates that the plurality of metal wires are not disposed in parallel to each other, including not only a case where the plurality of metal wires are disposed such that they are orthogonal to each other but also cases where the crossing angle between metal wires is a sharp angle or an obtuse angle.

According to this embodiment, the wire receiving section 10 may be divided into two stages in the vertical direction, first wire receiving section 10a and second wire receiving section 10b. That is, the second wire receiving section for receiving the second metal wire is formed at a predetermined height with respect to the first wire receiving section 10a. The first wire receiving section 10a receives the first metal wire while the second wire receiving section 10b receives the second metal wire. By disposing the wire receiving sections 10 on two stages in the vertical direction separately, the nipping pieces 20 formed on each of the wire receiving sections 10 can prevent each metal wire from falling off from the wire receiving section 10 further securely.

Further, according to this embodiment, the wire receiving section 10 may be so constructed to communicate with other wire receiving section 10. By constructing the wire receiving sections 10 such that they communicate with each other, a metal wire received. in the wire receiving section 10 is connected with another metal wire received in another wire receiving section 10 such that they make close contact with each other. If the crossing section of respective metal wires makes close contact with each other, the crossing section is connected and fixed further firmly. Correspondingly, the assembling strength of a support constructed by the respective metal wires is improved.

The crossing section of the plurality of metal wires is not restricted to the above described close contact condition. If the metal wire can be securely prevented from falling off from the wire receiving section 10, it is permissible to connect and fix the metal wires crossing each other with a slight gap therebetween.

The wire receiving section 10 is not limited to such a constitution that secures communication with each other as described above. Although the wire connecting fitting 100, shown in FIG. 15, is constructed such that the first wire receiving section 10a communicatas with the second wire receiving section 10b, it can be considered that the first wire receiving section 10a is open in a direction opposite to the second wire receiving section 10b. More specifically, upon manufacturing of the wire connecting fitting 100 according to the present invention, by pressing a single steel sheet, which is base material, from two directions which are opposite to each other, the first wire receiving section 10a and the second wire receiving section 10b which are open to two opposite directions are formed. When a plurality of metal wires which constitute a support are connected with the wire connecting fitting 100 having a plurality of wire receiving sections 10 which are open to opposite directions, it is considered to dispose the wire connecting fitting 100 at a section in which a plurality of metal wires cross each other.

If the opening is described in detail, it is provided for receiving metal wires constituting a support in the wire receiving section 10. It may be formed in any configuration if such an operation is exerted but more specifically, by forming the wire receiving section 10 to have a substantially U-shaped sectional configuration, an open space is formed on one side.

The wire connecting fitting 100 of this embodiment having the above-described constitution connects and fixes the crossing section in which a plurality of metal wires overlap each other. Thus, the crossing section of the plurality of metal wires can be maintained at a predetermined angle. This wire connecting fitting 100 can be used at any position in a support constituted of a plurality of metal wires in which the metal wires cross each other and is capable of connecting and fixing the crossing section between the metal wires securely.

Thus, according to the wire connecting fitting 100 according to this embodiment, to metal wires (hereinafter referred to as just parent beam) arranged in the longitudinal direction of the support, other metal wires (hereinafter referred to as just child beam) arranged orthogonally can be easily added, thereby intensifying the general purpose performance of the support constituted of the metal wires.

On the other hand, when the supports are connected and fixed with the wire connecting fitting 100 according to the present invention, an embodiment in which a rising section of the support is to be connected can be considered.

In addition to the wire receiving section 10 and the nipping pieces 20, the feature of the wire connecting fitting 100 of such type comprises the height adjusting means 50 and the rotation preventing section 60.

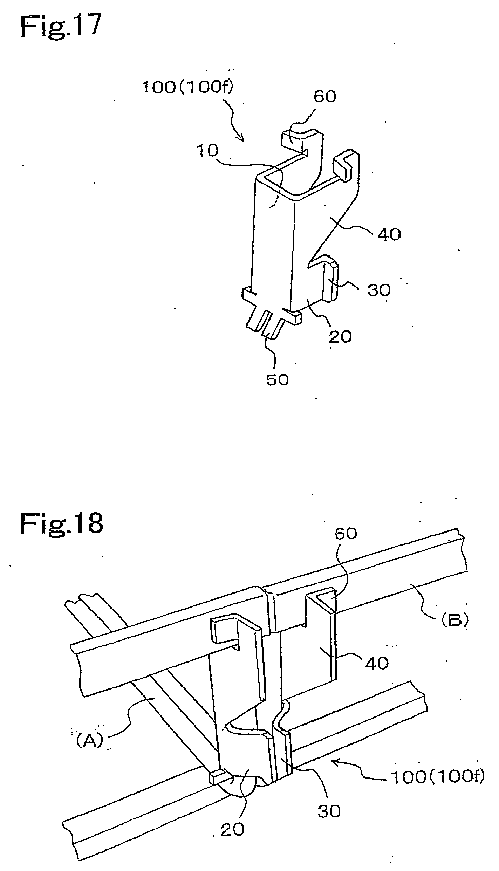

According to this embodiment, as shown in FIGs. 17-19, the wire receiving section 10 is preferably formed in substantially the same dimension in terms of the axial direction as the height of the rising section of the metal wire to be received in the wire receiving section 10. Such a formation prevents the metal wire received in the wire receiving section 10 from being deviated in the axial direction.

The rising section of the support is used for preventing wires or pipes placed on the support from falling from the side end of the support as described above and erected by bending metal wires constituting both ends or one end of the support into a substantially L-shaped configuration. Then, the upper end of this rising section is coupled with the side face of the other metal wire (B) so as to form a closing state. That is, the rising section refers to a section in which a section bent into a substantially L-shaped configuration of the metal wire (A) received in the wire receiving section 10 is a lower end while the coupling section of the metal wire (A) to the other metal wire (B) is an upper end. Incorporating the wire receiving section 10 in this section makes it possible to suppress a deviation in the axial direction of the rising section.

Next, the height adjusting means 50 will be described. The height adjusting means 50 is provided on the lower end of the wire receiving section 10 and pushes the wire connecting fitting 100 according to the present invention itself upward to press or engage the rotation preventing section 60 provided on the upper section of the wire connecting fitting 100 against/with the lower face of the other metal wire (B). Although any configuration or constitution is permitted as long as this operation can be exerted, specifically, it is considered to extend a protruded piece having plasticity obliquely from the lower end of the wire receiving section 10. By adopting such configuration, a following operation is exerted. That is, by fixing the nipping piece 20 after the plurality of metal wires (A) belonging to the rising section of the support are received in the wire receiving section 10, the protruded piece abuts on the bent section on the lower end of the rising section. If the protruded piece abuts on the bent section of the rising section, an urging force is generated by a distortion of the protruded piece so that an operation like the leaf spring is exerted. The wire connecting fitting 100 itself is pushed upward by the urging force generated in this protruded piece, so that the upper section of the wire connecting fitting 100 (or rotation preventing section 60) is pressed against the lower face of the other metal wires (B). As described above, the other metal wires (B) are connected within the wire connecting fitting 100 such that they are separated. Because the upper section of the wire fixing fitting 100 presses the lower face of the other metal wires (B) which are separated within the wire connecting fitting 100, occurrence of a deviation between the separated other metal wires (B) in a vertical direction can be blocked. Correspondingly, the vertical position of the wire connecting fitting 100 in the rising section of the support can be adjusted.

Meanwhile, this height adjusting means 50 is not limited to the protruded piece having plasticity extending obliquely from the lower end of the wire receiving section 10 but it is permissible to provide the protruded piece such that it is extended vertically from the lower end of the wire receiving section 10 and then inclines the distal end of the protruded piece.

Then, the rotationpreventing section 60 will be described. The rotation preventing section 60 is fitted to the other metal wires (B) to block the wire connecting fitting 100 from rotating on the metal wire. Although any configuration or constitution is permitted as long as such an operation is exerted, specifically, as shown in FIGs. 17, 18, it is considered that this is formed with the separation preventing section 40 and disposed at a position opposing the wire receiving section 10 so that it is fitted to the rear face of the other metal wires (B). With this constitution, it comes that the rotation preventing section 60 nips the plurality of metal wires (A) or other metal wires (B) together with the wire receiving section 10 so as to block the wire connecting fitting 100 from rotating on the plurality of metal wires (A).

Thus, a deviation or looseness at a fixing position on the plurality of metal wires (A) in the wire connecting fitting 100, which can be produced by the rotation of the wire connecting fitting 100, can be blocked securely.

Further, by nipping the plurality of metal wires (A) and other metal wires (B) with the wire receiving section 10 and the rotation preventing section 60 as described above, the deviation or looseness which can occur in the entire width direction of the support can be blocked.

This rotation preventing section 60 may be provided with plasticity. If the rotation preventing section 60 is provided with the plasticity, when an external force is applied to the rotation preventing section 60, it is distorted so that an urging force is generated. As a result, the rotation preventing section 60 is always pressed against the other metal wires (B) by the urging force generated in the rotation preventing section 60 so that the above-described rotation preventing operation is exerted further effectively. As a means for providing the rotation preventing section 60 with plasticity, it is considered that as shown in FIG. 17, the outside of the rotation preventing section 60 is inclined slightly toward the wire receiving section 10.

The wire connecting fitting 100 according to the present invention can be so constructed that its sectional configuration of a portion having the nipping pieces 20 on both sides is designed into a configuration shown in the sectional view of FIG. 2.

As regards the configuration shown in FIG. 2, the nipping pieces 20 erected on opposite sides of the wire receiving section 10 are disposed in a substantially U-shaped sectional configuration (a Japanese character "J"-shaped sectional configuration) so that an opening of the wire receiving section 10 is formed. Two or more metal wires are arranged through this opening and the nipping pieces 20 are brought into a contact with the outside of the two or more metal wires.

The wire connecting fitting 100 according to the present invention is formed in a dimension corresponding to the diameter or the like of the metal wires to be combined. That is, the width of the wire receiving section 10, dimension of the nipping pieces 20 and the like are determined based on dimensions corresponding to the diameter of the metal wires to be received in the wire receiving section 10.

By combining respective components described above, the wire receiving fitting 100 according to the present invention is constituted and the wiring/piping material supports are connected and fixed with the wire connecting fitting 100 at the rising section.

The wire connecting fitting 100 according to the present invention may be used for not only connecting the supports with each other as described above, but also for connecting a plurality of metal wires by combining a plurality of metal wires to assemble the support.

Next, the attaching body fixing tool according to the present invention will be described.

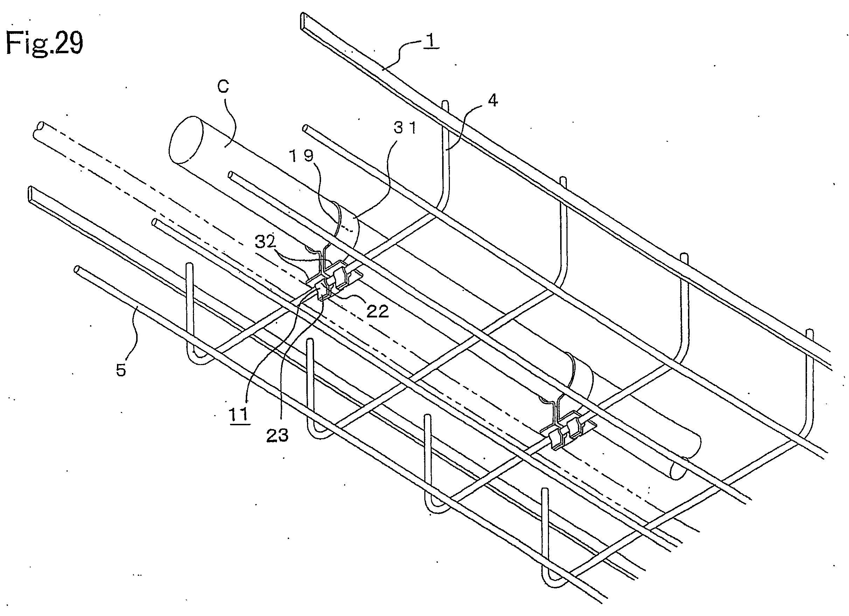

The attaching body fixing tool 11 for wiring/piping material support of the present invention fixes the attaching body onto the wiring/piping material support constituted of metal wires. As shown in FIGs. 29 -31 and 34, it comprises an attaching body holding section for holding the attaching body and a mounting section to be mounted on the metal wires constituting the support 1. The mounting section includes plastically deformable receiving sections 22 having an opening for receiving the metal wire. By deforming the receiving section 22 plastically, at least a portion of the opening is covered so that the metal wire is held within the receiving section 22.

The mounting section has a pair of approaching sections 23 provided on the opening side of the receiving section 22 and the receiving section 22 is deformed plastically until the approaching sections 23 relatively approach to each other by gripping and nipping the approaching sections 23 with a nipping tool so as to make the pair of the approaching sections 23 relatively approach to each other. Consequently, at least a portion of the opening is covered so as to hold the metal wires within the receiving section 22.

Alternatively, the mounting section has a pair of the approaching sections 23 on the opening side of the receiving section 22 and by deforming the receiving section 22 until the pair of the approaching sections 23 comes into substantially close contact with each other, the opening of the receiving section 22 is covered so that the metal wires are received in the receiving section 22 and the attaching body fixing tool 11 is mounted on the metal wire.

The mounting section can be disposed along the outer faces of the metal wires received in the receiving section 22 by plastically deforming the receiving section 22 so that the received metal wires do not swing within the receiving section 22.

As the attaching body, it is permissible to use a wiring box 61 or a saddle 31 for fixing the decorative plate 51 or the cable.

Next, another attaching body fixing tool according to the present invention will be described.

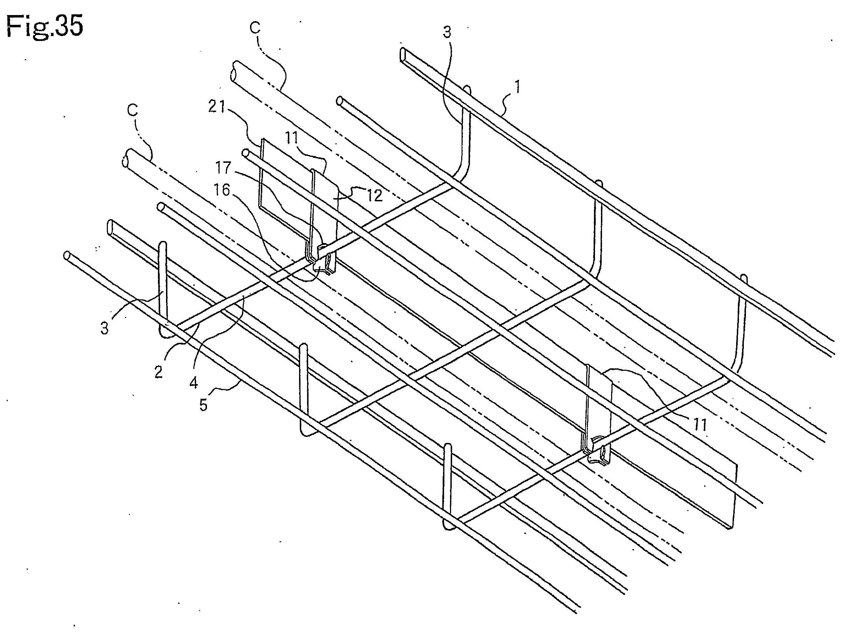

Another attaching body fixing tool for the wiring/piping material support according to the present invention is an attaching body fixing tool for mounting the attaching body on a support constituted of wires and as shown in FIGs. 35-45, comprises a holding section 12 for holding the separator 21 which is an attaching body and a mounting section 13 to be mounted on the support 1. The mounting section 13 has an opening 15 which is directed outward and includes an receiving section 14 capable of receiving the metal wires constituting the support through the opening 15, an falling-off preventing section 16 which covers a portion of the opening 15 when it is deformed plastically for preventing the metal wire from falling off and an inclination preventing section 17 for preventing itself from inclining while the metal wires are received in the receiving section 14.

Thus, the attaching body fixing tool 11 is fitted to the separator 21, which is an attaching body, and a metal wire of a lateral frame wire 4 of a support, and then, the attaching body fixing tool 11 can be mounted at a predetermined position of the support 1 through a simple work only by nipping and pressing a pair of the falling-off preventing sections 16 on the right and left of the attaching body fixing tool 11 with a nipping tool such as pliers. Consequently, the separator 21 can be installed easily at a predetermined position. Because the attaching body fixing tool 11 is provided with the holding section 12, the separator 21 is held by the attaching body fixing tool 11 stably. Further, because the attaching body fixing tool 11 is provided with the inclination preventing section 17, the separator 21 can be kept in its upright condition. Only by forming cutout and cuts by pressing and erecting the cuts in the attaching body fixing tool 11, a holding section 12 for holding the separator 21 and a falling-off preventing section 16 for preventing a metal wire from falling off and an inclination preventing section 17 for preventing the attaching body fixing tool 11 itself from inclining can be formed. Additionally, because the falling-off preventing section 16 is provided with a pressing protrusion 16b, the attaching body fixing tool 11 can be held firmly and stably on the metal wire.

The separator 21 which is the attaching body is constituted of a metal plate having a predetermined width and erected on a placing section 2 of the support 1 in a placing direction by the attaching body fixing tool 11. Referring to FIG. 35, the separator 21 is provided in the center with respect to the width direction and by dividing the placing section 2 into the right and left sections, a plurality of same kinds or different kinds of cables C placed on the placing section 2 are separated and arranged. The position of the separator 21 is not limited to the center in the width direction but it is permissible to arrange two or more separators 21 side by side in the width direction on the support 1. Further, the separator 21 is not limited to the metal plate as described above, but may be of plate constituted of, for example, metal mesh or punching metal or the like.

Next, the attachingbodyaccording to thepreserit invention will be described.

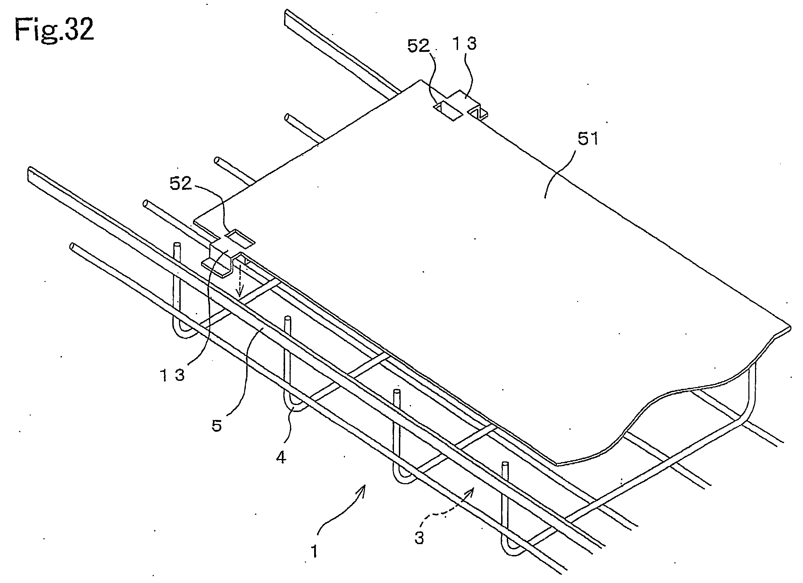

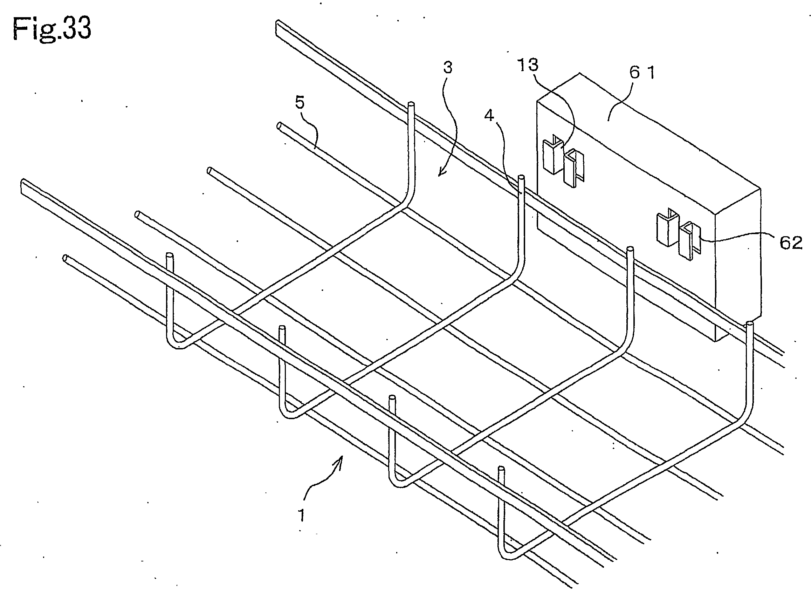

The attaching body according to the present invention is installed on the wiring/piping material support constituted of wires and, as shown in FIGs. 32, 33, includes a mounting section 13 to be mounted on the metal wires constituting the support 1. The mounting section 13 has a plastically deformable wire receiving section having an opening for receiving the metal wires and when the wire receiving section is deformed plastically, a portion of the opening is covered so as to hold the metal wires within the wire receiving section.

The mounting section 13 has a pair of approaching sections provided on the opening side of the wire receiving section and when the wire receiving section is deformed plastically until the approaching sections relatively approach to each other by gripping and nipping the approaching sections with a nipping tool so as to make the pair of the approaching sections relatively approach to each other, at least a portion of the opening is covered so as to hold the metal wires within the wire receiving section.

The mounting section 13 has a pair of the approaching sections on the opening side of the wire receiving section and by deforming the wire receiving section until the pair of the approaching sections comes into substantially close contact with each other, the opening of the wire receiving section is covered so that the metal wires are received in the wire receiving section and the attaching body is mounted on the metal wire.

The mounting section 13 is disposed along the outer faces of the metal wires received in the receiving section by deforming the wire receiving sec tion plastically so that the received metal wires do not swing within the receiving section.

As the attaching body, for example, the wiring box 61 may be employed or the decorative plate 51 may be employed.

Here, the support for use in the present invention will be described.

The support 1 shown in FIGs. 46-48 is comprised of a placing section 2 on which a cable C, which is a wiring/piping material, is placed and a side wall section 3 erected from both ends of the placing section 2. As for this support 1, a plurality of metal lateral frame wires 4, each which is bent into a substantially U-shaped sectional configuration, comprised of a bottom section 4a for forming the placing section 2 and a rising section 4b for forming both side wall sections 3, are connected to a metal connecting wire 7 and a longitudinal frame wire 5, arranged on the upper end of the side wall section 3 and the placing section 2 respectively in the longitudinal direction so as to form a net configuration extending laterally and longitudinally. The upper end outside face of the rising section 4 of the lateral frame wire 4 and the connecting wire 7 are connected to each other by welding through a fused section 8 in which both of them cross. The lower face of the bottom section 4a of the lateral frame wire 4 and the longitudinal frame wire 5 are welded together also.

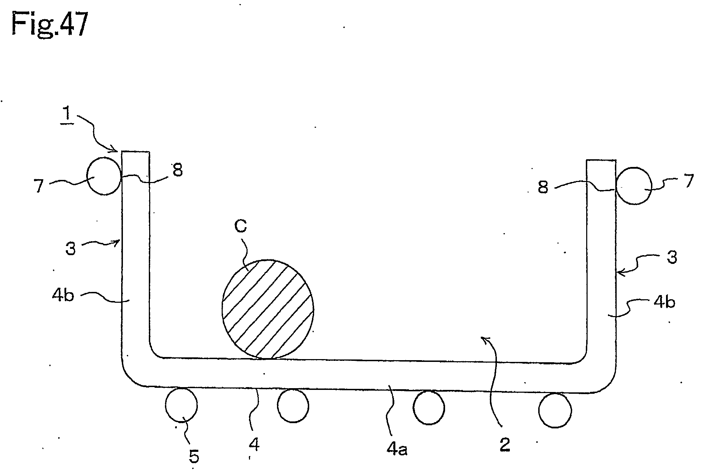

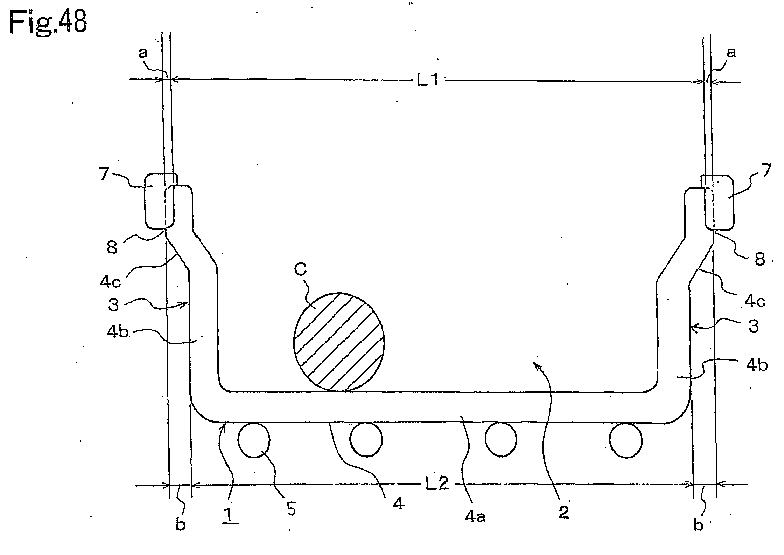

The support 1 shown in FIGs. 46, 48 is comprised of the placing section 2 and the side wall sections 3 erected from both end sides of the placing section 2 like the support 1 in FIG. 47. Particularly, the connecting wire 7 is formed flat in a vertical direction and at least a side face which abuts on the lateral frame wire 4 is formed flat. This flattening of the connecting wire 7 can be carried out by crushing in a horizontal direction with a well known means. In the meantime, the connecting wire 7 may be formed in other configuration. If it is flattened, welding is facilitated and a high strength is obtained. The connecting wire 7 is connected while it is protruded slightly above the upper end of the rising section 4b of the lateral frame wire 4. However, the present invention is not limited to this example, but it may be connected in the vicinity of the upper end of the rising section 4b.

The both rising sections 4b of the lateral frame wire 4 are formed with a step section 4c which is bent in a step-shaped configuration at the middle section. A lower section below a fused section 8 to the connecting wire 7 is protruded inward by only the dimension corresponding to a difference in step b with respect to the upper end. If in the fused section 8 in which the lateral frame wire 4 and the connecting wire 7 are welded together, both the lateral frame wire 4 and the connecting wire 7 are melted out or any one of them is melted out because material of the lateral frame wire 4 and the connecting wire 7 are different, a contact face between the lateral frame wire 4 and the connecting wire 7 is dented by only a melting depth a into the other member. Here, the difference in step b, that is, a difference in dimension between the outside face of the upper end of the rising section 4b and the outside face of a lower section below the step section 4c protruded inward of the support is formed larger than at least the melting depth a. Here, the aforementioned difference in step b corresponds to the bending dimension in claims.

Referring to FIG. 48, L1 indicates an inside dimension of the connecting wire 7 between the fused sections 8 and L2 indicates the outside dimension of an interval between the rising sections 4b of the lateral frame wire 4. As for the relation between the inside dimension L1 of the connecting wire 7 and the outside dimension of the rising section 4b, because there is a relation of b>a as described above, the relation of L1>L2 is always established.

The support 1 is so constructed that it can be piled up. When the supports 1 are piled vertically, they are piled such that the metal wires (that is, metal wires disposed in a width direction) disposed orthogonal to the metal wires disposed in the longitudinal direction of the support 1 are deviated in the longitudinal direction of the support 1. As a result, no waste space is generated and the volume generated when they are piled up can be reduced. Further, the supports do not bite into each other and the individual supports can be removed easily.

According to such piling constitution, the rising sections of the supporting members in upper and lower supports are deviated in the longitudinal direction and the rising section 4b of the lateral frame wire 4 of the upper or lower support 1 is inserted between the connecting wires 7 of the lower or upper support 1, such that both of them are in contact with each other. Thus, because the connecting wires 7 are pil ed up in a vertical direction, the upper and lower supports 1 keep contact with each other thereby generating no waste space between them and reducing the volume generated at the time of transportation or storage.

On the other hand, roller members 6 are attached to predetermined positions of the support 1 constituted of the metal wires. The support 1 is comprised of a bottom section and side sections erected on both sides of the bottom section by welding the metal wires into a net configuration in the lateral and longitudinal directions. A placing path is formed within the support 1 so as to receive a cable which is a wiring/piping material. The metal wires arranged in the width direction of the bottom section of the support 1 serves as the placing section 2 on which a cable is placed also. The rising section 4b is formed in a section in which the metal wires on the placing section 2 are extended laterally and longitudinally on the side section. Then, another metal wire is placed in the placing direction on the side section upper end 9 of the metal wire. The placing section 2 is arranged with a predetermined interval in the placing direction and the roller members 6 are attached to the metal wires on the placing section 2 and the metal wires on the rising section 4b which forms the side section.

If the roller members 6 are attached to only the rising section 4b, the roller members 6 attached to the metal wire in the rising section 4b can reduce pull resistance at a bent section of the support 1 in which the pull resistance is increased because the cable abuts on the metal wire in the rising section 4b.

### BEST MODE FOR CARRYING OUT THE INVENTION

Hereinafter, the embodiment of the wire connecting fitting 100 according to the present invention will be described with reference to the accompanying drawings.

### (Embodiment 1)

FIGs. 1-7 show the wire connecting fitting 100a according to the embodiment 1. In the wire connecting fitting 100a according to this embodiment, as shown in FIG. 1, a pair of nipping pieces 20 are erected on opposite sides of a wire receiving section 10 and gripping pieces 30 are extended outward from the distal ends of these nipping pieces 20. The width dimension of the wire receiving section 10 in this wire connecting fitting 100a is substantially the same as the diameter of two metal wires.

When connecting and fixing a plurality of metal wires with the wire connecting fitting 100a according to this embodiment, as shown in FIGs. 2-5, first, a plurality of metal wires are received in the wire receiving section 10 and the nipping pieces 20 erected from opposite sides of the wire receiving section 10 are deformed. As a result of the deformation processing, the nipping pieces 20 come to nip the metal wires firmly. As for the deformation processing to this nipping pieces 20, a nipping tool (P) such as pliers is engaged with the gripping pieces 30 erected outward from the distal ends of the nipping pieces 20 and nipped all at once (or gradually) so as to deform the nipping pieces 20 plastically. Consequently, the respective one faces of the gripping pieces 30 are brought into substantially close contact with each other as shown in FIG. 5.

As a result of this plastic deformation, the nipping pieces 20 are deformed along the outer faces of a plurality of metal wires received in the wire receiving section 10 so that the nipping pieces 20 substantially close the wire receiving section 10.

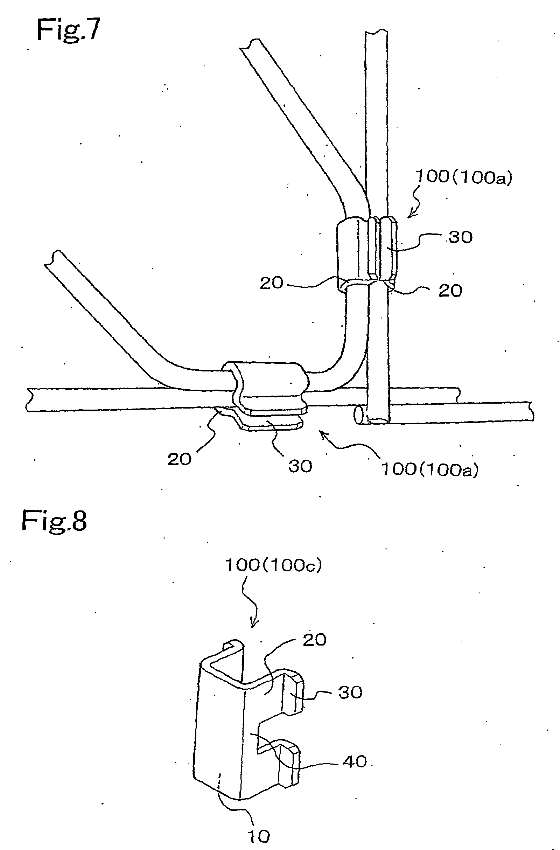

The application of the wire connecting fitting 100a according to this embodiment is not limited to any particular one, but this is preferable for connecting and fixing supports, as shown in FIG.6 or FIG.7 more specifically, a straight metal wire of a short length sandwiched by a bent section and the other bent section in a metal wire which constitutes the aforementioned support.

### (Embodiment 2)

FIGs. 8-13 show the wire connecting fitting 100c according to the embodiment 2 of the present invention. In the wire connecting fitting 100c according to this embodiment, two pairs of nipping pieces 20 are erected from opposite sides of the wire receiving section 10 having a width dimension for receiving two metal wires and a separation preventing section 40 is provided between these two pairs of the nipping pieces 20. That is, a remaining section to a cutout formed between the aforementioned two pairs of the nipping pieces 20 corresponds to the separation preventing section 40.

This separation preventing section 40 intends to assemble a plurality of metal wires arranged side by side temporarily when two metal wires disposed side by side are received in the wire receiving section 10. This temporary assembly is for preventing the two metal wires received in the wire receiving section 10 before the nipping pieces 20 are deformed plastically from being separated from each other because they are nipped temporarily by the separation preventing section 40.

Thus, when two metal wires are connected and fixed with the wire connecting fitting 100c according to this embodiment, the two metal wires are first received in the wire receiving section 10 through an opening between the nipping pieces 20 erected to be opposed to each other and then, assembled temporarily by the separation preventing section 40. After that, as shown in FIGs. 2-5, the nipping pieces 20 erected from opposite sides of the wire receiving section 10 are deformed plastically. As a result of this plastic deformation, the nipping pieces 20 nip the metal wires firmly. As for the deformation processing on this nipping pieces 20, a nipping tool (p) such as pliers is engaged with the gripping pieces 30 extending outward form the distal ends of the nipping pieces 20 and is nipped all at once (or gradually) so as to deform the nipping pieces 20 plastically. Consequently, the respective one faces of the gripping pieces 30 are brought into substantially close contact with each other as shown in FIG. 5.

As a result of this plastic deformation, the nipping pieces 20 are deformed along the outer faces of a plurality of metal wires received in the wire receiving section 10 so that the wire receiving section 10 is substantially closed by the nipping pieces 20.

Because in the wire connecting fitting 100c according to this embodiment, the wire receiving section 10 and the nipping pieces 20 are formed continuously or integrally, it can exert a high strength even when metal wires arranged side by side to each other are fixed.

Further, the wire connecting fitting 100c according to this embodiment is capable of preventing metal wires nipped by the nipping pieces 20 from being deviated in an axial direction because the other wire B arranged orthogonally invades into a space concerned with the deviation preventing section. This metal wire (B) is arranged just under the metal wire (A) nipped by the wire nipping pieces 20 and welded.

Although according to this embodiment, the width dimension of the wire receiving section 10 in the wire connecting fitting 100c of this embodiment is substantially the same as the diameters of two metal wires while the dimension of the cutout for a space in the deviation preventing section is substantially the same as the diameter of a metal wire, the present invention is not limited to this configuration. That is, the width dimension of the wire receiving section 10 and the dimension of the cutout in the deviation preventing section may be changed depending on a place in which the wire connecting fitting 100c is to be disposed.

In the wire connecting fitting 100c according to this embodiment, as shown in FIG. 10, the formation dimension L1 in the longitudinal direction of the metal wire (A) to be nipped may be substantially the same as an interval L2 between another metal wire (B1) orthogonal to the wire (A) and the metal wire (B2) arranged side by side to another metal wire (B1). If it is formed in the dimension L1 and the wire connecting fitting 100c is received between the other metal wires (B1) and (B2), the deviation in the longitudinal direction of the nipped metal wire (A) can be prevented. Of course, it is permissible to block the deviation by assembling with the installation interval L2 for the metal wires (B1), (B2) as the supports set to the formation dimension L1 of the wire connecting fitting 100c.

The wire connecting fitting 100c according to this embodiment may be formed in a constitution which produces the deviation preventing operation by the deviation preventing section and the deviation preventing operation caused by setting the formation dimension L1 of the wire connecting fitting 100c substantially equal to the interval L2 of the metal wire at the same time.

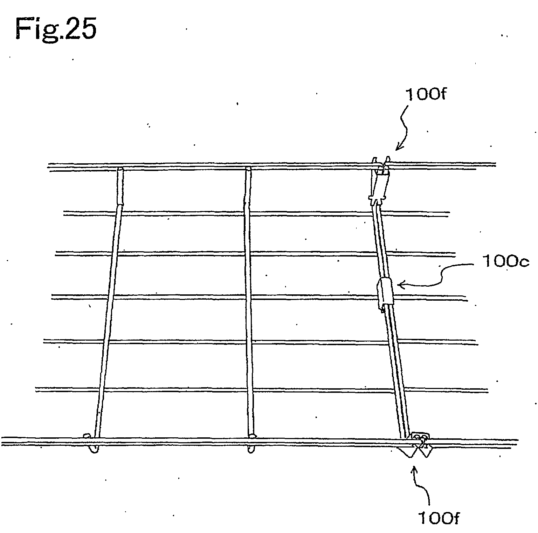

An application of the wire connecting fitting 100c according to this embodiment is usage as a connecting fitting for the supports as shown in FIG. 25 and this is used preferably for connecting and fixing metal wires constituting the end portion of a support side by side.

### (Embodiment 3)

FIGs. 14 - 16 show a wire connecting fitting 100d according to the embodiment 3 of the present invention. In the wire connecting fitting 100d according to this embodiment, two pairs of nipping pieces 20 are erected from both ends of awire receiving section 10 having substantially the same width dimension as the diameters of two metal wires. Then, a pair of the separation preventing sections 40 are erected through each slit between these two pairs of the nipping pieces 20 and bolt holes 41 are formed in the separation preventing section 40.

The bolt holes 41 are provided to prevent the separation preventing section 40 from expanding when it receives a strong load from the metal wire received in the wire receiving section 10 and allows the expansion preventing bolt 42, which is a separate member, to be inserted thereinto so as to fit to another separation preventing section 40 provided to be opposed. However, the expansion preventing bolt 42 is not an indispensable component and if the application of the wire connecting fitting 100d according to this embodiment connects and fixes a portion on which no so large load is applied, the separation preventing sections 40 do not need to be fitted to each other through the expansion preventing bolt 42.

When a metal wire is fixed on the wire connecting fitting 100d, as shown in FIGs. 15, 16, the metal wire (A) is received into the wire receiving section 10 through the opening between the nipping pieces 20 and the separation preventing section 40 erected to be opposed to each other and assembled temporarily by the separation preventing sections 40. After that, as shown in FIGs. 2-5, the nipping pieces 20 erected from apposite sides of the wire receiving section 10 are deformed. As a result of this deformation processing, the nipping pieces 20 nip the metal wire firmly. As for the deformation processing to this nipping pieces 20, a nipping tool (P) such as pliers is engaged with the gripping pieces 30 extending outward from the distal ends of the nipping pieces 20 and nipped all at once (or gradually) so as to deform the nipping pieces 20 plastically. Consequently, the respective one faces of the gripping pieces 30 are brought into a substantially close contact with each other as shown in FIG. 5.

As a result of this plastic deformation, the nipping pieces 20 are deformed along the outer faces of a plurality of metal wires received in the wire receiving section 10, so that the nipping pieces 20 substantially close the wire receiving section 10.

As shown in FIGs. 15, 16, the expansion preventing bolt 42 is threaded into the bolt holes 41 formed in the separation preventing sections 40 which oppose each other at positions nipping two metal wires and fixed.

Because the wire connecting fitting 100d according to this embodiment is provided with the expansion preventing bolt 42, the wire receiving section 10 can be prevented from expanding outward even if an extremely large load is applied to the nipped metal wire (A).

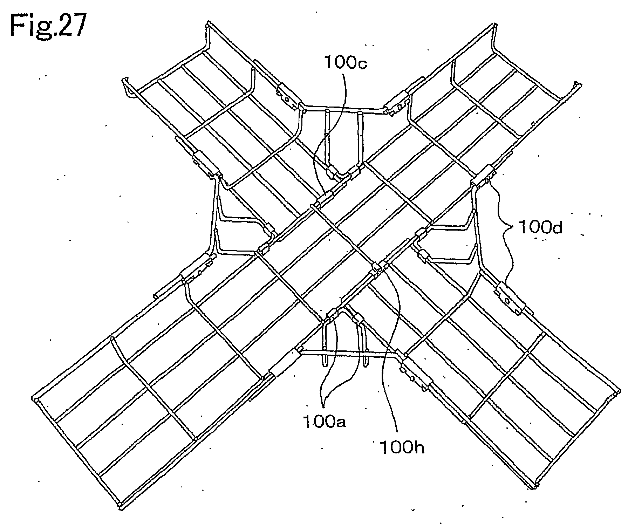

The application of the wire connecting fitting 100d according to this embodiment is preferable for usage for connecting and fixing metal wires which constitute the corner portion of the support as shown in FIG. 27.

### (Embodiment 4)

FIGs. 17-19 show a wire connecting fitting 100f according to the embodiment 4 of the present invention. In the wire connecting fitting 100f according to this embodiment, as shown in FIG. 17, a pair of the nipping pieces 20 disposed on opposite sides of the wire receiving section and a pair of the separation preventing sections 40 having rotation preventing sections 60 are erected with respect to the wire receiving section 10 having substantially the same width dimension as the diameters of two metal wires. A height adjusting means 50 is provided on the bottommost section of the fitting 100f. As shown in FIG. 18, because the wire connecting fitting 100f according to this embodiment is formed in substantially the same dimension as the height of the rising section of the support, metal wires nipped by the nipping pieces 20 can be prevented from being deviated in the axial direction thereof.

The rotation preventing sections 60 are disposed at positions opposing the wire receiving section 10 as shown in FIGs. 17 or 18 so as to engage the rear face of the metal wire (B). Thus, the rotation preventing sections 60 nip the metal wire (A) and the metal wire (B) together with the wire receiving section 10 in order to prevent the wire connecting fitting 100f from rotating on the metal wire (A).

Thus, it is possible to prevent a deviation or looseness of a fixing position on the metal wire (A) of the wire connecting fitting 100f due to a rotation of the wire connecting fitting 100f.

on the other hand, theheight adjusting means 50 is provided on the bottommost section of the wire connecting fitting 100f and when it abuts on metal wires located at the rising section of the support, slightly distorted. A spring-like operation is produced by this distortion so that an operation for pushing up the wire connecting fitting 100f itself is exerted. Thus, the vertical position of the wire connecting fitting 100f at the rising section is adjusted.

The wire connecting fitting 100f is used for mainly the rising section of the support as shown in FIG. 18.

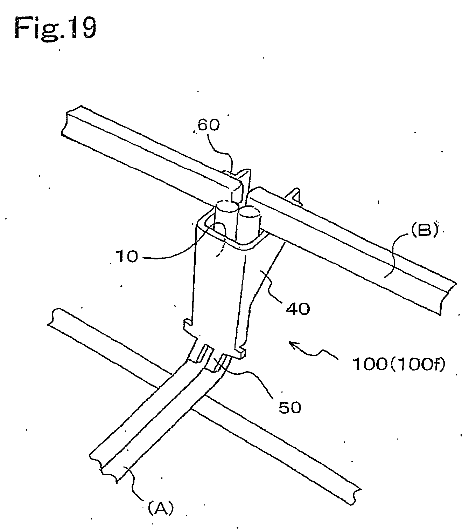

When the metal wire is fixed with the wire connecting fitting 100f according to this embodiment, the metal wire (A) is received in the wire receiving section 10 through the opening between the nipping pieces 20 and the separation preventing sections 40 and assembled temporarily with the separation preventing sections 40, while the rotation preventing sections 60 abut on the outer face of the metal wire (B). At the same time, as shown in FIG. 19, by making the height adjusting means 50 abut on the inside of a bent section of the metal wire, the wire connecting fitting 100f itself is pushed upward so as to adjust the vertical position.

After that, as shown in FIGs. 2-5, the nipping pieces 20 erected from opposite sides of the wire receiving section 10 are deformed. As a result of this deformation processing, the nipping pieces 20 nip the metal wire firmly. As for the deformation processing to the nipping pieces 20, a nipping tool (P) such as pliers is engaged with the gripping pieces 30 extending outward from the distal ends of the nipping pieces 20 and nipped all at once (or gradually) so as to deform the nipping pieces 20 plastically. Consequently, the respective one faces of the gripping pieces 30 are brought into a substantially close contact as shown in FIG. 5.

As a result of this plastic deformation, the nipping pieces 20 are deformed along the outer faces of a plurality of metal wires received in the wire receiving section 10 so that the nipping pieces 20 substantially close the wire receiving section 10.

The wire connecting fitting 100f according to this embodiment is preferably used for connecting and fixing the rising section of the support as shown in FIG. 25.

### (Embodiment 5)

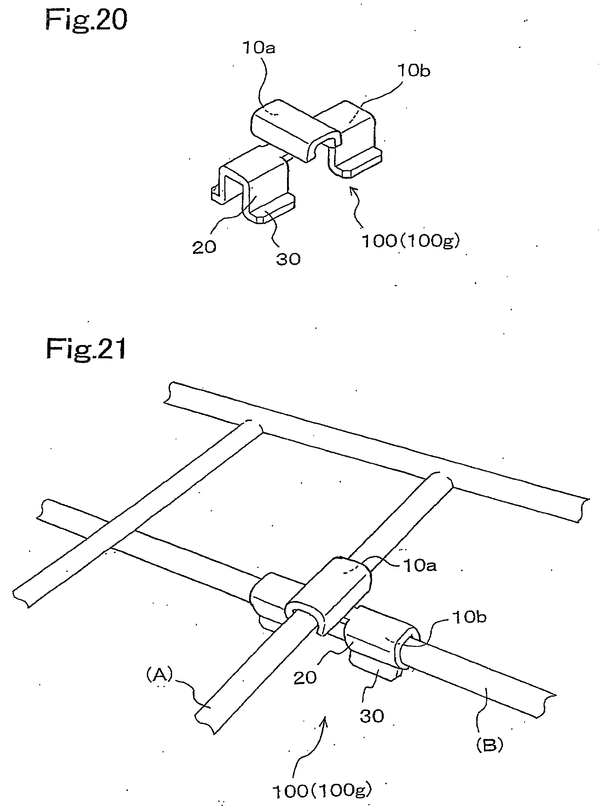

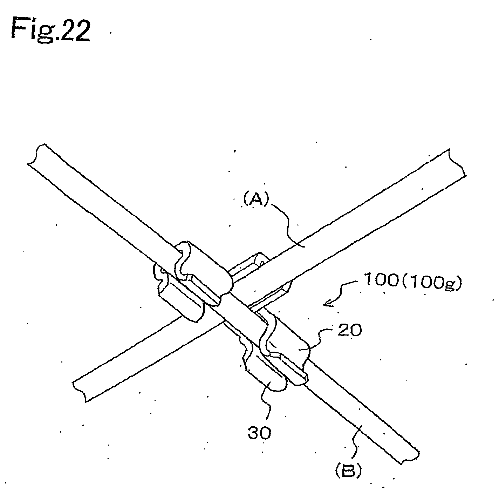

FIGs. 20-22 show a wire connecting fitting 100g according to the embodiment 5 of the present invention. The connecting fitting 100g according to this embodiment, as shown in FIG 22, comprises a first wire receiving section 10a and a second wire receiving section 10b which are provided on two stages in the vertical direction and the nipping pieces 20 are formed on opposite sides of the second wire receiving section 10b. The wire receiving sections 10a, 10b have substantially the same width dimension as the diameter of a metal wire and particularly, the first wire receiving section 10a is formed in a substantially U-shaped sectional configuration.

On the other hand, the second wire receiving section 10b is provided so as to extend outward from the center section on the lower end of the first wire receiving section 10a. The second wire receiving sections 10b have a pair of the nipping pieces 20 elected vertically on opposite sides of each so that the metal wire received in the second wire receiving section 10b are nipped by the respective nipping pieces 20.

When a plurality of metal wires are connected and fixed with the wire connecting fitting 100g according to this embodiment, first, a metal wire is received in the first wire receiving section 10a and next, other metal wire to be disposed orthogonally to the aforementioned metal wire is received in the second wire receiving section 10b. Then, the respective nipping pieces 20 erected vertically on the second wire receiving section 10b are deformed. As a result of this deformation processing, the nippi.ng pieces 20 nip the metal wire firmly. As for the deformation processing to the nipping piece 20, a nipping tool (P) such as pliers is engaged with the gripping pieces 30 extending outward from the distal ends of the nipping pieces 20 and nipped all at once (or gradually) so as to deform the nipping pieces 20 plastically. Consequently, the respective one faces of the gripping pieces 30 are brought into substantially close contact as shown in FIG. 5.

As a result of this plastic deformation, the nipping pieces 20 are deformed along outer faces of a metal wire received in the second wire receiving section 10h so that the nipping pieces 20 substantially close the second wire receiving section 10b.

The wire connecting fitting 100g according to this embodiment is preferably used for connecting and fixing the two metal wires disposed orthogonal to each other vertically as shown in FIG.21 or FIG.22.

### (Embodiment 6)

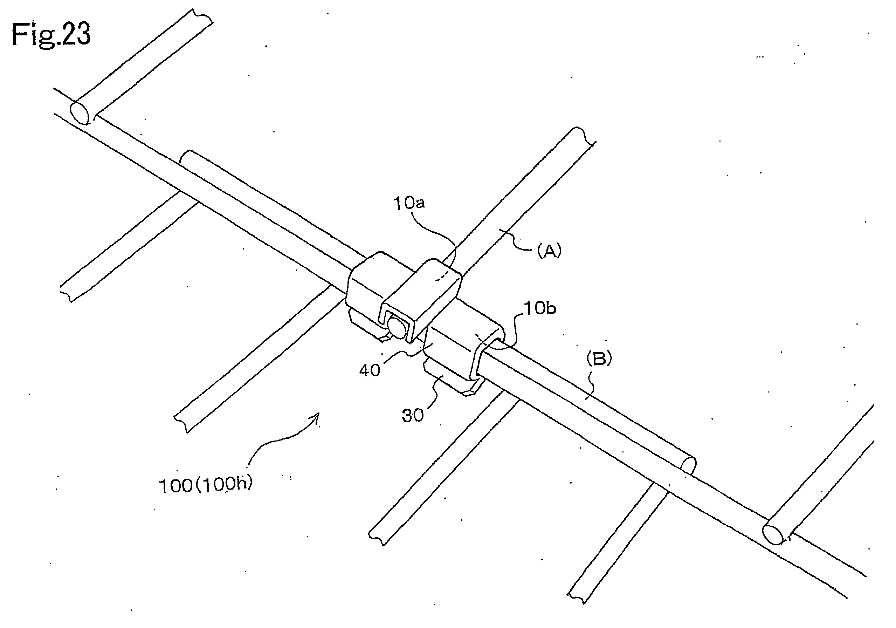

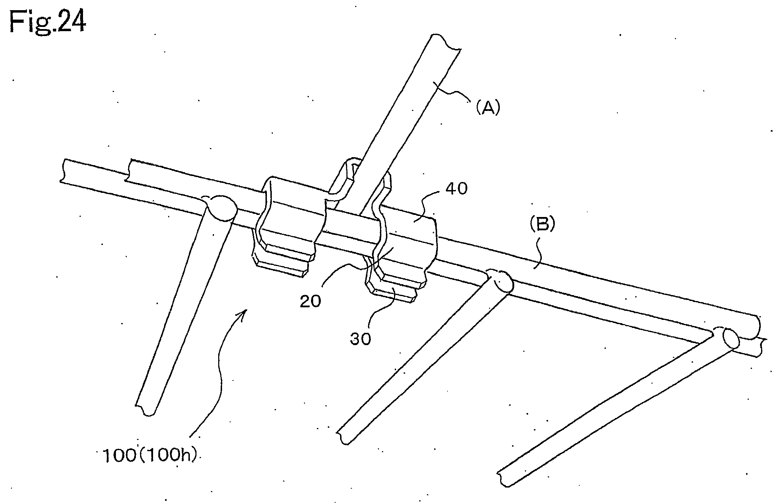

FIGs. 23, 24 show a wire connecting fitting 100h according to the embodiment 6 of the present invention. The connecting fitting 100h according to this embodiment comprises the first wire receiving section 10a and the second wire receiving section 10b which are formed on two stages in the vertical direction as shown in FIG. 23. The nipping pieces 20 are formed on opposite sides of the second wire receiving section 10b. The first wire receiving section 10a has substantially the same width dimension as the diameter of a metal wire and is formed in a substantially U-shaped sectional configuration.

On the other hand, the second wire receiving sections 10b are extended outward from the center, which is the proximal end, of the lower end of the first wire receiving section 10a. These second wire receiving sections 10b have substantially the same width dimension as the diameters of two metal wires and a pair of the nipping pieces 20 are erected vertically from both sides. The respective nipping pieces 20 nip a plurality of metal wires received in the second wire receiving section 10b.

When a plurality of metal wires are connected and fixed with the wire connecting fitting 100h according to this embodiment, first, a metal wire is received in the first wire receiving section 10a. Next, other two metal wires are received within the second wire receiving section 10b arranged orthogonal to the aforementioned metal wire. Then, the respective nipping pieces 20 erected vertically on the second wire receiving section 10b are deformed. As a result of the deformation processing, the nipping pieces 20 nip the metal wires firmly. As for the deformation processing to the nipping pieces 20, a nipping tool (P) such as pliers is engagedwith the gripping pieces 30 extending outward from the distal ends of the nipping pieces 20 and nipped all at once (or gradually) so as to deform the nipping pieces 20 plastically. Consequently, the respective one faces of the nipping pieces 30 are brought into substantially close contact as shown in FIG. 5.

As a result of this plastic deformation, the nipping pieces 20 are deformed along the outer faces of the two metal wires received in the second wire receiving section 10b, so that the nipping pieces 20 substantially close the second wire receiving section 10b.

The wire connecting fitting 100h according to this embodiment is preferably used for connecting and fixing two metal wires arranged side by side as shown in FIGs. 23, 24 or 27. FIGs. 23, 24 show part of the support shown in FIG. 27 in enlargement. The support shown in FIG. 35 is used at a position in which wires or pipes cross each other and comprises a support (1) and a support (2) . That is, with respect to the inner circumference of a metal wire arranged on outermost side of metal wires constituting the bottom section of the support (1), an inner circumference of a metal wire arranged at an end section of other support (2) is hooked and engaged by cutting out a portion of the side section of the support (1). The wire connecting fitting 100h according to this embodiment is preferably used for connecting and fixing the engaged section.

Hereinafter, the attaching body fixing tool and the attaching body according to the present invention will be described about the embodiments.

### (Embodiment 7)

FIG. 29 shows a saddle 31 according to the embodiment of the attaching body fixing tool. The saddle 31 is mounted on longitudinal frame wires 5 with an appropriate interval in the mounting direction in order to hold a cable C with the support 1. This saddle 31 is formed by bending a metal plate having a specified width by pressing. The diameter of a circle formed by bending the metal plate is so large as to receive the cable C thereby constructing an attaching body holding section 19. Both distal ends of the saddle 31 are bent outward to form flanges 32. Each of the right and left flanges 32 has a pair of square holes and the receiving section 22 (corresponds to the nipping pieces 20 in FIG. 1) of the attaching body fixing tool 11, which is another member and has substantially the same configuration as the wire fixing fitting 100 shown in FIG. 1 is inserted into this pair of the square holes. After that, approaching sections 23 (correspond to the gripping pieces 30 in FIG. 1) at the distal end of the receiving section 22 are gripped with a nipping tool P and nipped and pressed. Consequently, the approaching sections 23 are brought into close contact with each other so as to cover part or all of the opening in the receiving section 22. Covering the opening enables the flanges of the saddle 31 and the lateral frame wires 4 of the support to be fixed integrally.

### (Embodiment 8)

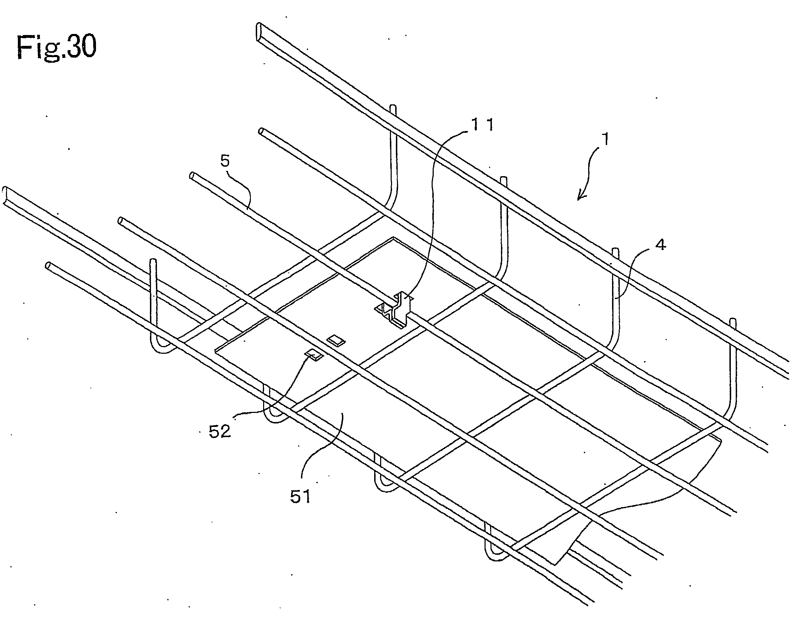

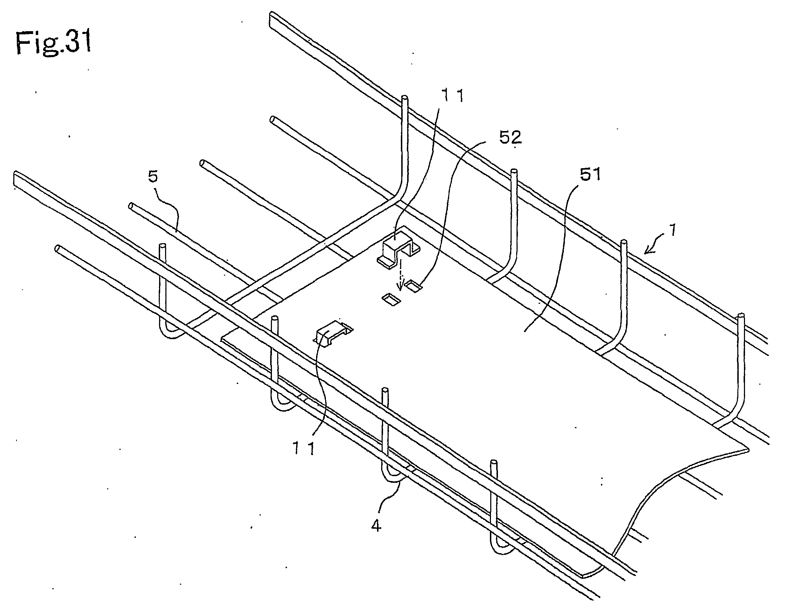

FIGs. 30, 31 show the condition in which a decorative plate 51 is fixed on the support 1 with the attaching body fixing tool 11 which is other member of the embodiment 7. This decorative plate 51 is placed on the lateral frame wires 4 of the support 1 and has a pair of square holes 52 provided with a specified interval in the longitudinal direct ion and located substantially in the center with respect to the width direction. The square holes 52 allow the same attaching body fixing tool 11 as FIG. 29 to be inserted. One type of the square hole 52 is so formed that its one side is in substantially the same dimension as the width of the attaching body fixing tool 11 while another type thereof is so formed that its one side is longer in the mounting direction. This corresponds to cases where the intervals of the lateral frame wires 4 are different depending on the support 1. according to this embodiment also, the decorative plate 41 can be installed on the support 1 easily like the respective embodiments.

### (Embodiment 9)

FIG. 32 shows the condition in which the decorative plate 51 which is an attaching body is fixed on the support 1. This decorative plate 51 is mounted on an upper opening section of the support 1 and three sides of the square hole 52 are cut out and then, one side is bent at 90° and a mounting section 13 to be mounted on the longitudinal frame wire 5 is formed integrally on this bent section. After the decorative plate 51 is engaged on the upper opening section of the support 1, the mounting section 13 is deformed to complete fixing of the decorative plate 51 on the support 1.

### (Embodiment 10)

FIG. 33 shows the condition in which a wiring box 61 which is an attaching body is fixed on the support 1. This wiring box 61 is mounted on a side wall section 3 of the support 1. A pair of square holes 62 are provided on the bottom face of the wiring box 61 and by cutting out three sides like the decorative plate 51 in FIG. 32 and bending one side at 90°, the mounting section 13, which is to be mounted on the lateral frame wire 4 on the side wall section 3 of the support 1, is formed integrally on this bent section. According to this embodiment also, the wiring box 61 can be mounted on the support 1 easily like the respective embodiments.

### (Embodiment 11)

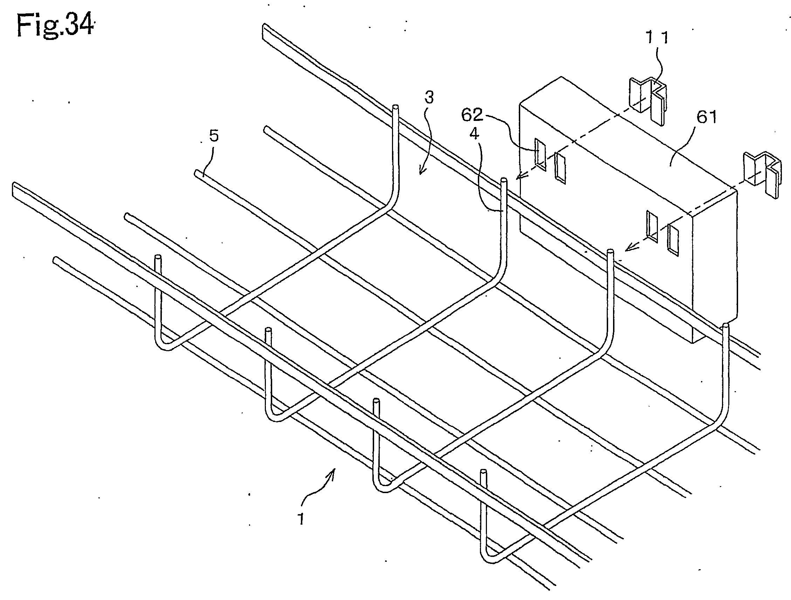

FIG. 34 shows the condition in which the wiring box 61 is fixed on the support with the attaching body fixing tool 11 which is other member of the embodiments 7 and 8. This wiring box 61 is mounted on the side wall section 3 of the support 1 and the square holes 62 are provided substantially in the center of the bottom wall section 63. Then, the mounting section 13 of the same attaching body fixing tool 11 as FIGs. 29 or FIG. 31 is inserted into the square holes 62 and mounted on the lateral frame wire 4 of the support 1, so that it is mounted on the support 1. In the meantime, it is permissible to mount the wiring box 61 on the support 1 and after that, insert the attaching body fixing tool 11 into the square holes 62 in the wiring box 61 and fix it on the support 1.

### (Embodiment 12)

FIGs. 35.45 show the attaching body fixing tool 11 according to the embodiment 12. FIG. 35 is a perspective view showing the condition in which a separator 21 is mounted on the support 1 using the attaching body fixing tool 11 as seen from below.

The attaching body fixing tool 11 is formed by bending a metal plate which is pressed and has a predetermined width at 180° along the center line 1 into a substantially U-like configuration, which is symmetrical in terms of its right and left sides. A gap between overlapping metal plates bent along the center is formed in a size capable of receiving the separator 21 so as to form a holding section 12 for receiving the separator 21. The mounting section 13 for mounting on a metal wire of a lateral frame wire 4 of the support 1 is provided on each of both distal end sections of the attaching body fixing tool 11. The mounting section 13 includes the receiving section 14 for receiving the metal wire inside and is provided with an opening 15 which communicates with the outside. Further, the mounting section 13 is provided with an falling-off preventing section 16 which can be deformed with a nipping tool P such as pliers. A small pressing protrusion 16b is provided integrally on a circular portion of the falling-off preventing section 16. The receiving section 14 and falling-off preventing section 16 form the mounting section 13.

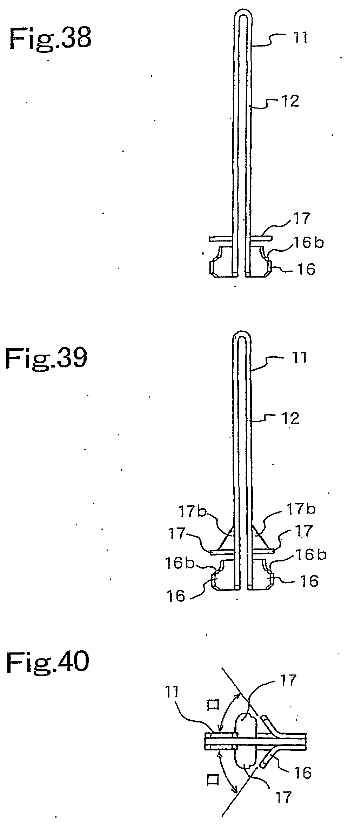

A pair of inclination preventing sections 17, which are protruded outward like eaves, are provided above the receiving section 14 by bending them at 90° in the horizontal direction. If a reinforcement rib 17b is provided between orthogonal flat planes of the holding section 12 and the inclination preventing section 17 as shown in FIG. 39, the horizontality of the inclination preventing section 17 can be further maintained stably.

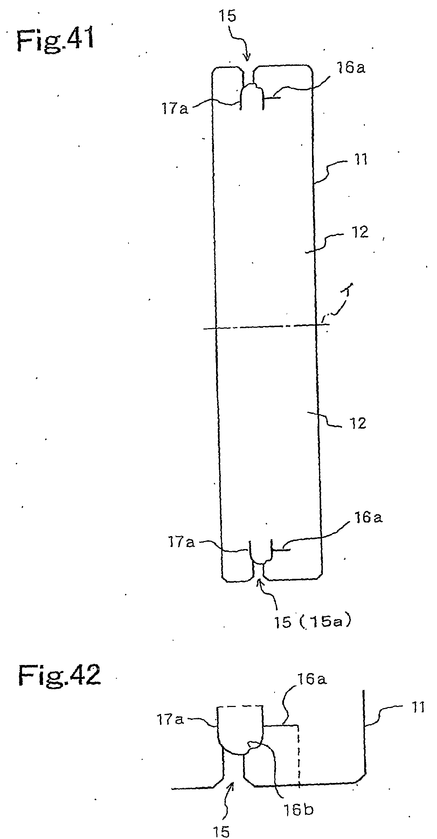

For the falling-off preventing section 16, as shown in FIG. 41, cutouts 15a of the openings 15 are formed on both end sections of a metal plate before bending by pressing and horizontal cuts 16a and substantially U-shaped cuts 17a are formed. The falling-off preventing section 16 can be formed easily by raising the cuts 16a outward by next pressing by rotating in the horizontal direction. The opening angle of the raised falling-off preventing section 16 is 58° as shown in FIG. 40. The reason for this opening angle is that the attaching body fixing tool 11 can be fitted to the metal wire with its vertical posture from above and that this angle allows it to be gripped easily with a nipping tool such as pliers and the like. The inclination preventing section 17 can be formed easily by raising the substantially U-shaped cut 17a at 90° by rotating in the vertical direction with respect to its proximal end.

When the separator 21 is installed using the attaching body fixing tools 11 for the support 1 for wiring/piping of this embodiment 12, first, the separator 21 is disposed at a predetermined position of the support 1 and a plurality of attaching body fixing tools 11 are fitted to the separator 21. Next, the attaching body fixing tool 11 is pushed down until the inclination preventing section 17 abuts on the upper end of a metal wire of the lateral frame wire 4 and the metal wire is received into the receiving section 14 through the openings 15 on both end sections. FIG. 35 indicates a state just after the attaching body fixing tool 11 is fitted to the separator 21 and the metal wire of the lateral frame wire 4.

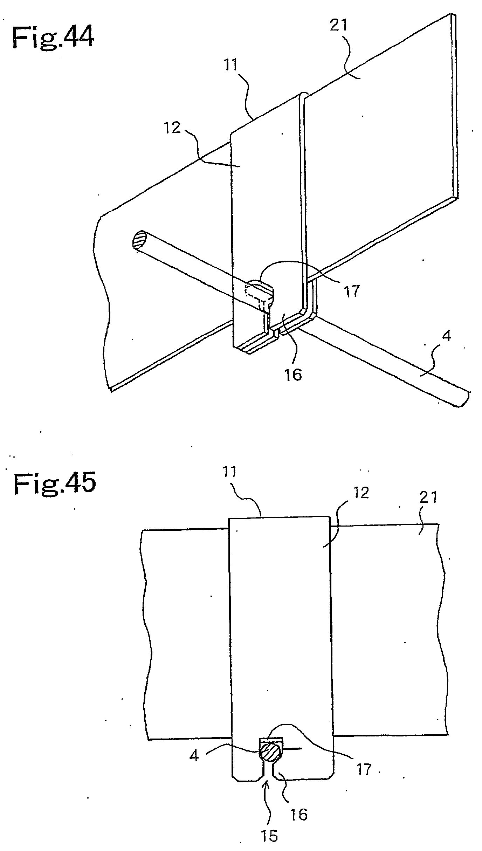

As shown in FIG. 42, the distal ends of the falling-off preventing sections 16 in pair of the right and left, which are deformable, are deformed plastically by nipping and pressing with a nipping tool P such as pliers, so that finally, as shown in FIGs. 44, 45, they are restored to a state in which the same plane as the holding section 12 is formed, that is, a state before the cut is raised. In this state, the circular section of the falling-off preventing section 16 coincides with the outer circumference of the metal wire. Because the pressing protrusion 16b of the falling-off preventing section 16 presses the outer circumference of the metal wire of the lateral frame wire 4 strongly, the metal wire is held firmly by the end section 14a and pressing protrusion 16b to be opposed to each other within the receiving section 14.

Because the en tire lower face of the inclination preventing section 17 provided on the attaching body fixing tool 11 abuts on the upper end of the metal wire, the attaching body fixing tool 11 is prevented from inclining in the right and left direction from the time before the falling-off preventing section 16 is deformed to the time after it is deformed. As a result, the separator 21 received in the holding section 12 is prevented from falling to one side of the right or lef t, so that the separator 21 is held on the support 1 with a stabilized upright posture.

### BRIEF DESCRIPTION OF THE DRAWIGNS

FIG. 1 is a perspective view of a wire connecting fitting 100 (100a) of the embodiment 1;
FIG. 2 is a first diagram showing a process for deforming the wire connecting fitting 100 plastically according to the present invention;

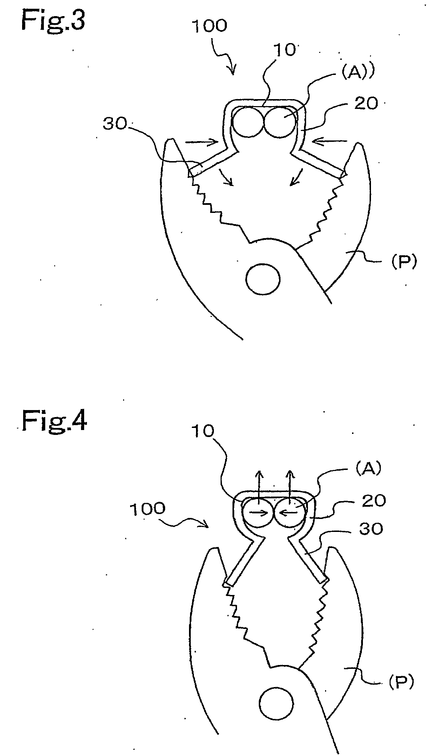

FIG. 3 is a second diagram of the above process;
FIG. 4 is a third diagram of the above process;
FIG. 5 is a fourth diagram of the above process;
FIG. 6 is a diagram showing the use condition of the wire connecting fitting 100 (100a) of FIG. 1 as viewed from above;
FIG. 7 is a diagram showing the use condition of the wire connecting fitting 100 (100a) as seen from below;
FIG. 8 is a perspective view of the wire connecting fitting 100 (100c) of the embodiment 2;
FIG. 9 is a sectional view taken along the line A-A of the wire connecting fitting 100 (100c) of FIG. 8;
FIG. 10(a) is a side view of a state in which the wire connecting fitting 100 of FIG. 10 is arranged between the other metal wires (B1) and (B2) orthogonal to a nipped metal wire (A) while FIG. 10 (b) is a side view of the wire connecting fitting 100 (100a) of FIG. 8 in a state in which it receives the other metal wire B orthogonal to the deviation preventing section;

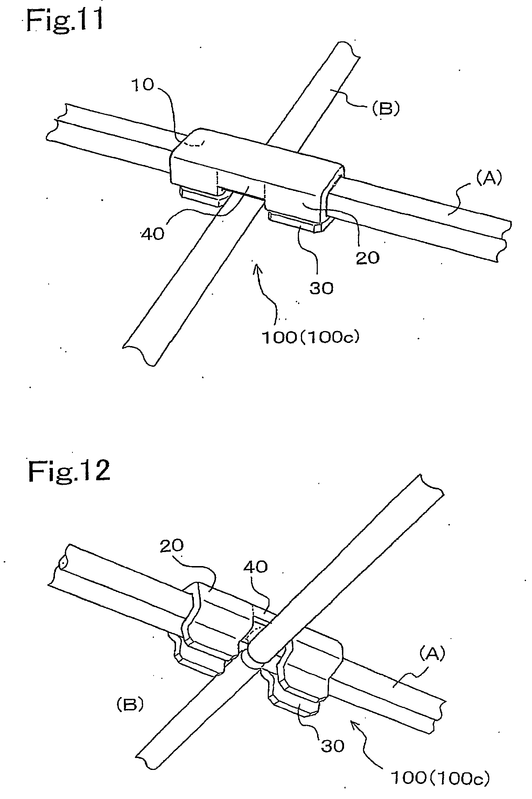

FIG. 11 is a diagram showing a use condition of the wire connecting fitting 100 (100c) of FIG. 8 as seen from above;
FIG. 12 is a diagram showing a use condition of the wire connecting fitting 100 (100c) of FIG. 8 as seen from below;
FIG. 13 is a diagram showing other use condition of the wire connecting fitting 100 (100c) of FIG. 8;
FIG. 14 is a perspective view of the wire connecting fitting 100 (100d) of the embodiment 3;
FIG. 15 is a diagram showing the use condition of the wire connecting fitting 100 (104d) of FIG. 14 as seen from above;
FIG. 16 is a diagram showing the use condition of the wire connecting fitting 100 (100d) of FIG. 14 as seen from below;
FIG. 17 is a perspective view of thewire connecting fitting 100 (100f) of the embodiment 4;
FIG. 18 is a diagram showing the use condition of the wire connecting fitting 100 (100f) of FIG. 17 as seen from the front;
FIG. 19 is a diagram showing the use condition of the wire connecting fitting 100 (100f) of FIG. 17 as seen from the rear;
FIG. 20 is a perspective view of the wire connecting fitting 100 (100g) of the embodiment 5;
FIG. 21 is a diagram showing the use condition of the wire connecting fitting 100 (100g) of FIG. 20 as seen from above;
FIG. 22 is a diagram showing the use condition of the wire connecting fitting 100 (100g) of FIG. 20 as seen from below;
FIG. 23 is a diagram showing the use condition of the wire connecting fitting 100 (100h) of the embodiment 6 as seen from above;
FIG. 24 is a diagram showing the use condition of the wire connecting fitting 100 (100h) of FIG. 22 as seen from below;
FIG. 25 is a diagram showing a state in which the straight section of a support is connected and fixed with the wire connecting fitting of the present invention;

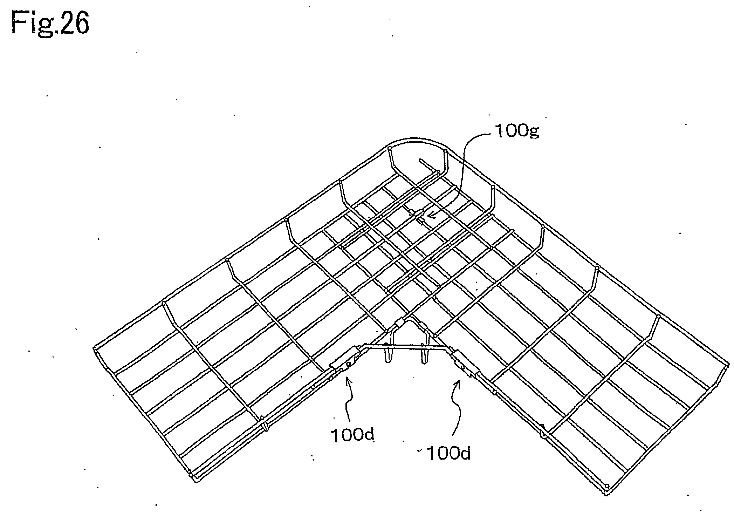

FIG. 26 is a diagram showing a state in which the corner section of a support is connected and fixed with the wire connecting fitting of the present invention;
FIG. 27 is a diagram showing a state in which the crossing section of a support is connected and fixed with the wire connecting fitting of the present invention;

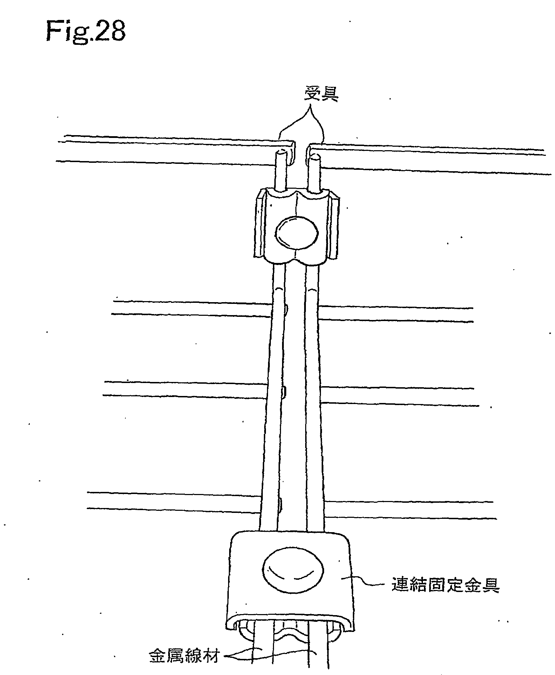

FIG. 28 is a diagram showing the use condition of the wire connecting fitting according to a conventional art;
FIG. 29 is a diagram showing the state in which a cable C is mounted on the support with a saddle 31 according to an embodiment of the attaching body fixing tool of the present invention and a perspective view showing a state in which a separator is attached to the wiring/piping material support using the attaching body fixing tool for the wiring/piping material support of the embodiment;
FIG. 30 is a perspective view showing the attaching body fixing tool for the wiring/piping material support according to other embodiment of the present invention;
FIG. 31 is a perspective view showing the attaching body fixing tool for the wiring/piping material support according to the embodiment shown in FIG. 30 as seen from above;
FIG. 32 is a perspective view showing the attaching body for the wiring/piping material support according to still other embodiment of the present invention;
FIG. 33 is a perspective view showing the attaching body for the wiring/piping material support according to still other embodiment of the present invention;
FIG. 34 is a perspective view showing the attaching body fixing tool for the wiring/piping material support according to still other embodiment of the present invention;
FIG. 35 is a perspective view showing a state in which the separator is attached to the wiring/piping material support using the attaching body fixing tool for the wiring/piping material support of the embodiment of the present invention;

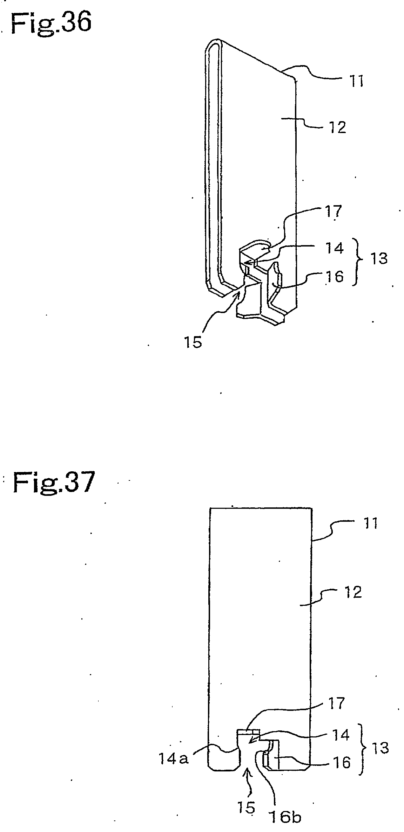

FIG. 36 is a perspective view showing the attaching body fixing tool of FIG. 35;
FIG. 37 is a front view of the attaching body fixing tool of FIG. 35;
FIG. 38 is a side view of the attaching body fixing tool of FIG. 35;
FIG. 39 is a side view showing another attaching body fixing tool of FIG. 35;
FIG. 40 is a bottom view showing an opening angle of the falling-off preventing section of the attaching body fixing tool of FIG. 35;
FIG. 41 is a plan view showing a state before bending of the attaching body fixing tool of FIG. 35;
FIG. 42 is an enlarged view of a cut section in FIG. 40;

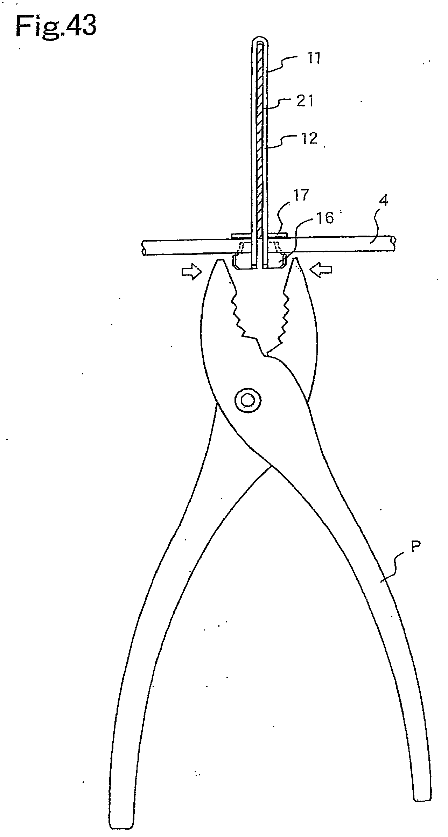

FIG. 43 is a side view showing a state in which the falling off preventing section of the attaching body fixing tool of FIG. 36 is nipped and pressed with a nipping tool;
FIG. 44 is a perspective view showing a state after the separator is attached by nipping and pressing the falling-off preventing sections of the attaching body fixing tool of FIG. 35;
FIG. 45 is a front view showinga state in which the separator is attached by nipping and pressing the falling-off preventing sections of the attaching body fixing tool of FIG. 35;
FIG. 46 is a perspective view showing the wiring/piping material support used in the present invention;
FIG. 47 is a front view showing a state before the lateral frame wire and connecting wire of the support in FIG. 46 are welded;
FIG. 48 is a front view of the support;

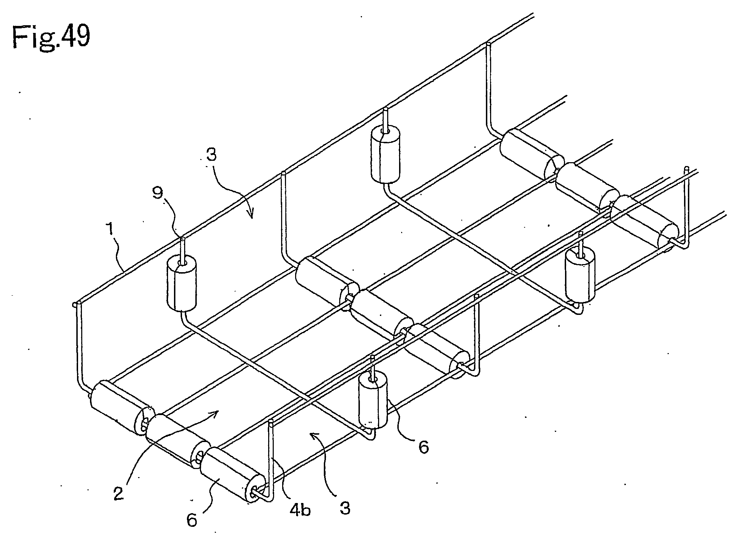

FIG. 49 is a perspective view showing the wiring/piping material supporting device according to another embodiment of the present invention; and

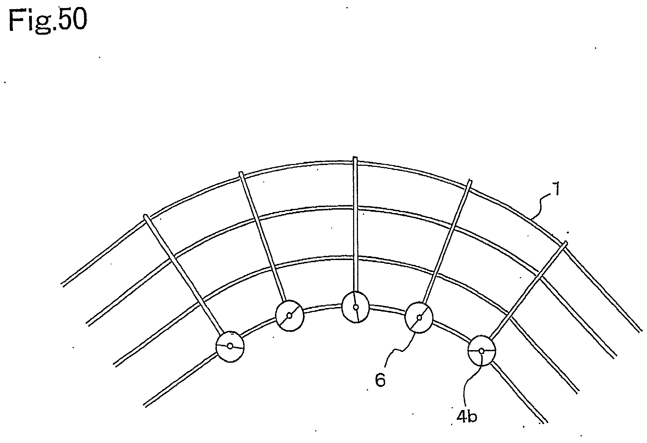

FIG. 50 is a plan view showing a modification of the wiring/piping material supporting device of FIG. 49.

## Claims

1. A wire connecting fitting for connecting supports which are formed in a net configuration by combining a plurality of metal wires, assembling the supports and the like, comprising:
at least one wire receiving section for receiving a plurality of metal wires arranged side by side or a plurality of metal wires arranged to cross each other into said side by side condition or crossing condition;
at least a pair of nipping pieces disposed on opposite sides of the wire receiving section and deformed plastically by nipping with a tool so as to nip one or a plurality of metal wires received in said wire receiving section; and
gripping pieces extending outward from the distal ends of both the nipping pieces and capable of gripping with said tool.

2. A wire connecting fitting for connecting supports which are formed in a net configuration by combining a plurality of metal wires, assembling the supports and the like, wherein the wire connecting fitting is formed in a substantially U-shaped sectional configuration having an opening, a wire receiving section and a pair of nipping pieces, said wire connecting fitting comprising:
separation preventing sections provided on said nipping pieces and abutting on said two metal wires arranged side by side in the wire receiving section through said opening to prevent the both wires from separating from each other, where the two metal wires are fixed in the side by side condition by deforming the nipping pieces plastically.

3. The wire connecting fitting according to claim 2, wherein both the separation preventing sections are provided with bolt holes in which an expansion preventing bolt for preventing the separation preventing sections from expanding outward is inserted.

4. The wire connecting fitting according to claim 2 or 3, wherein the wire connecting fitting is formed in substantially the same dimension as an interval of other metal wires arranged in parallel with each other and orthogonally to a metal wire nipped by the nipping pieces, where, when the wire connecting fitting is arranged between the other metal wires, said nipped metal wire is prevented from being deviated in an axial direction thereof.

5. The wire connecting fitting according to claim 2 or 3, further comprising a deviation preventing section which engages opposite outsides of other metal wires constituting the support and arranged orthogonally to a metal wire nipped by the nipping pieces to prevent said nipped metal wire from being deviated in an axial direction thereof.

6. The wire connecting fitting according to claim 2 or 3, wherein when the wire connecting fitting is arranged at an orthogonal portion of the metal wire nipped by the nipping pieces and other metal wires arranged orthogonally to the metal wire and constituting a support, said metal wire is received in the wire receiving section while said other metal wires are received in a space portion formed such a proximal end thereof is defined by side ends of the nipping pieces, and the other metal wires do not interfere with said nipping pieces.

7. A wire connecting fitting for connecting a crossing section, in which a first metal wire and a second metal wire overlap each other, of a wiring/piping material support constructed by crossing a plurality of metal wires comprising the first metal wire and the second metal wire, comprising:
a first wire receiving section for receiving said first metal wire;
a second wire receiving section for receiving said second metal wire;
an opening which is formed to communicate with the respective wire receiving sections, for receiving the first metal wire and the second metal wire into the respective wire receiving sections; and
nipping pieces formed integrally with said wire receiving sections for preventing said metal wires from falling off from said wire receiving sections,
wherein said respective wire receiving sections maintain a state in which the first metal wire and the second metal wire cross at a predetermined angle.

8. The wire connecting fitting according to claim 7, wherein the first wire receiving section and the second wire receiving section are in communication with each other.

9. A wire connecting fitting for connecting supports, each constituted with a plurality of metal wires by connecting the plurality of metal wires for constituting the support, comprising:
a wire receiving section for receiving said plurality of metal wires;
nipping pieces formed together with the wire receiving section, for preventing the plurality of metal wires received in said wire receiving section from falling off from the wire receiving section; and
a rotation preventing section arranged to be opposed to said wire receiving section and abutting on another metal wires arranged orthogonally to said metal wire, wherein
said supports are connected at rising sections thereof.

10. A wire connecting fitting for connecting supports, each constituted of a plurality of metal wires by connecting the plurality of metal wires for constituting the support, comprising:
a wire receiving section for receiving said plurality of metal wires;
nippingpieces formed together with the wire receiving section, for preventing a plurality of metal wires received in said wire receiving section from falling off from the wire receiving section;
height adjusting means which is formed on a lower end of said wire receiving section for pushing the wire connecting fitting upward to press an upper portion of the wire connecting fitting toward a lower face of said another metal wire; and
a rotation preventing section which is arranged to be opposed to said wire receiving section and abuts on another metal wire arranged orthogonally to said metal wire, wherein the supports are connected at rising sections thereof.

11. The wire connecting fitting according to claim 10, wherein the height adjusting means formed on the lower end of the wire receiving section extends from the lower end of said wire receiving section and is bent by caused the height adjusting means to abut on bent sections of the lower ends of rising sections of the plurality of metal wires received in said wire receiving section to generate an urging force, while the wire connecting fitting itself is pushed upward by this urging force to press an upper portion of the height adjusting means against the other metal wire arranged to cross said plurality of metal wires orthogonally.

12. The wire connecting fitting according to claim 10, wherein the rotation preventing section is arranged to be opposed to the wire receiving section and formed integrally with the wire receiving section, and the metal wires constituting said support are nipped by said wire receiving section and said rotation preventing section to prevent rotation of the wire connecting fitting on said metal wires.

13. The wire connecting fitting according to claim 10, wherein the dimension of the wire connecting fitting in an axial direction of a metal wire to be received in the wire receiving section is substantially the same as the height of the rising. section of the support constituted of said metal wires.

14. The wire connecting fitting according to any one of claims 1, 2, 7, 9 and 10, wherein the nipping pieces comprise protruded pieces formed integrally with the wire receiving section receiving the metal wires and adapted to be plastically deformed with nipping with a nipping tool such as pliers and gripping pieces extending outward from distal ends of said protruded pieces and capable of engaging with the nipping tool such as pliers.

15. The wire connecting fitting according to any one of claim 1, 2, 7, 9 and 10, wherein the nipping pieces are subjected to plastic deformation to deform along the outer faces of the metal wires received in the wire receiving section and substantially close said wire receiving section, and one face of the gripping pieces extending outward from the distal ends of the nipping pieces are brought into substantially close contact with each other to connect and fix the metal wires received in the wire receiving section.

16. An attaching body fixing tool for fixing an attaching body to a wiring/piping material support constituted of wires, wherein the attaching body fixing tool comprises an attaching body holding section for holding the attaching body and a mounting section which is mounted on the wires constituting the supports, and
said mounting section is provided with a plastically deformable wire receiving section having an opening for receiving said metal wires and at least a portion of said opening is coveredbyplasticallydeforming the wire receiving section to hold said wires within the wire receiving section.

17. The attaching body fixing tool according to claim 16, wherein said mounting section is provided with a pair of approaching sections on the opening side of said wire receiving section, and the approaching sections are gripped and nipped by a nipping tool for causing the pair of approaching sections to relatively approach to each other until the approaching sections relatively approach to each other to cover at least one portion of said opening is covered by plastically deforming the wire receiving section, thereby holding said metal wires within the wire receiving section.

18. The attaching body fixing tool according to claim 16, wherein the mounting section is provided with a pair of approaching sections on the opening side of said wire receiving section, and by deforming said wire receiving section until said pair of the approaching sections comes into substantially close contact with each other, the opening of said receiving section is covered to receive said metal wires in the wire receiving section so that mounting of the attaching body fixing tool on said metal wire is completed.

19. The attaching body fixing tool according to claim 16, wherein, for nipping the received metal wires so as to prevent the metal wires from swinging within the wire receiving section, said mounting section is arranged along outer faces of the metal wires received in said receiving section by plastically deforming said wire receiving section.

20. The attaching body fixing tool according to claim 16, wherein said attaching body is a box for wiring/piping material.

21. The attaching body fixing tool according to claim 16, wherein said attaching body is a decorative plate.

22. The attaching body fixing tool according to claim 16, wherein said attaching body is a saddle for fixing the wiring/piping material.

23. An attaching body which is mounted on a wiring/piping material support constituted of wires, wherein the attaching body is provided with a mounting section to be mounted on the wires constituting said support, said mounting section constitutes a plastically deformable wire receiving section having an opening for receiving said metal wires, and said wires are held within the wire receiving section by plastically deforming said wire receiving section to cover at least one portion of said opening.

24. The attaching body according to claim 23, wherein said mounting section is provided with a pair of approaching sections on the opening side of said wire receiving section, and the approaching sections are gripped and nipped by a nipping tool for causing the pair of approaching sections to relatively approach to each other until the approaching sections relatively approach to each other to cover at least one portion of said opening is covered by plastically deforming the wire receiving section, thereby holding said metal wires within the wire receiving section.

25. The attaching body according to claim 23, wherein the mounting section is provided with a pair of approaching sections on the opening side of said wire receiving section, and by deforming said wire receiving section until said pair of the approaching sections comes into substantially close contact with each other, the opening of said wire receiving section is covered to receive said metal wires in the wire receiving section so that mounting of the attaching body on said metal wire is completed.

26. The attaching body according to claim 23, wherein, for nipping the received metal wires so as to prevent the metal wires from swinging within the wire receiving section, said mounting section is arranged along outer faces of the metal wires received in said receiving section by plastically deforming said wire receiving section.

27. The attaching body according to claim 23, wherein said attaching body is a box for wiring/piping material.

28. The attaching body according to claim 23, wherein said attaching body is a decorative plate.

29. An attaching body fixing tool for mounting an attaching body to a wiring/piping material support constituted of wires, comprising: aholding section for holding said attaching body; and a mounting section to be mounted on the wires constituting said wiring/piping material support,
wherein said mounting section is provided with a wire receiving section having an opening which enables said wires to be received and a falling-off preventing section which covers a portion or all of said opening by plastically deforming the falling-off preventing section for preventing said wires from falling off, and by nipping and pressing with a nipping tool, the falling-off preventing section of said mounting section is moved and deformed in a direction substantially orthogonal to a receiving direction of thewires to be received through the opening in the wire receiving section, thereby covering said opening.

30. The attaching body fixing tool to a wiring/piping material support according to claim 29, wherein the falling-off preventing section of said counting sections is formed of a gripping piece which is nipped and pressed with a nipping tool.

31. The attaching body fixing tool to a wiring/piping material support according to claim 29, wherein the falling-off preventing section of said mounting section is formed of at least a pair of the gripping pieces capable of being nipped with a nipping tool.

32. The attaching body fixing tool to a wiring/piping material support according to claim 29, wherein the falling-off preventing sections of said mounting section nip the wires received in the wire receiving section so as to prevent said wires from swinging within said wire receiving section.

33. The attaching body fixing tool to a wiring/piping material support according to claim 29, further comprising an inclination preventing section for preventing the attaching body itself from being inclined in a condition that said attaching body has been mounted on said wires or when said attaching body is mounted on said wires.

34. The attaching body fixing tool to a wiring/piping material support according to claim 29, wherein said attaching body is a separator constituted of a partition member arranged along a longitudinal direction of the wiring/piping material support, for partitioning an interior of the support.
